(19) Europäisches Patentamt
European Patent Office
Office européen des brevets

(11) **EP 2 120 061 B1**

(12) **EUROPEAN PATENT SPECIFICATION**

(45) Date of publication and mention
of the grant of the patent:
**23.03.2011 Bulletin 2011/12**

(51) Int Cl.:
***G01S 19/23*** *(2010.01)*    ***G01S 19/26*** *(2010.01)*

(21) Application number: **08156031.0**

(22) Date of filing: **09.05.2008**

(54) **Improved frequency aiding method and system for navigation satellite receiver with crystal oscillator frequency hysteresis**

Verbessertes Frequenzhilfsverfahren und -system für einen Satellitennavigationsempfänger mit Quarzoszillatorfrequenzhysterese

Procédé à fréquence améliorée et système pour récepteur de navigation par satellite doté d'hystérèse de fréquence d'oscillateur à cristaux

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(43) Date of publication of application:
**18.11.2009 Bulletin 2009/47**

(73) Proprietor: **RESEARCH IN MOTION LIMITED**
**Waterloo, Ontario N2L 3W8 (CA)**

(72) Inventors:
• **Jin, Xin**
**Waterloo Ontario N2V 2S2 (CA)**
• **Grant, Christopher James**
**Waterloo Ontario N2V 2J6 (CA)**
• **Rosselet, Andrew Jonathan Gilbert**
**Scarborough Ontario M1C 2W7 (CA)**

(74) Representative: **Patel, Binesh**
**Barker Brettell LLP**
**10-12 Priests Bridge**
**London**
**SW15 5JE (GB)**

(56) References cited:
WO-A-01/86316    WO-A-03/032516
WO-A-03/038464    US-A- 5 081 431
US-A- 5 654 718    US-A1- 2003 184 399
US-B1- 6 509 870    US-B1- 7 148 761
US-B1- 7 253 767

• **FILLER R L: "Measurement and analysis of thermal hysteresis in resonators and TCXOs"** 19880601; 19880601 - 19880603, 1 June 1988 (1988-06-01), pages 380-388, XP010076437

## Description

<u>FIELD</u>

The present disclosure relates to navigation satellite signal receivers and, more particularly, to a method for reducing frequency uncertainty in frequency aiding for navigation satellite signal receivers using crystal oscillators, with frequency variation due to temperature variation.

<u>BACKGROUND</u>

Many modern wireless handheld communications devices, whether cellular telephone handsets or personal digital assistants (PDAs) are equipped with ancillary features.

One such feature that is gaining popularity is a Global Positioning System (GPS) receiver, whereby the present location of the handset or PDA may be established to within a precision of a few to a few hundred feet and by which a precise map of the immediate vicinity and/or directions from such present location to a desired destination may be provided.

A GPS receiver clock circuit typically uses a crystal oscillator (XO) or temperature compensated crystal oscillator (TCXO) to generate its local clock. These crystal oscillator or TCXO output signals, even with temperature compensation, are subject to variations due to changes in temperature, which may occur as the GPS receiver is moved to different locations, environments and temperatures, or when internal circuits generate heat. The oscillator signal variation in frequency in response to temperature change is complex and not necessarily uniform.
United States Patent No. 7,253,767 issued to Junkar *et al.* and entitled "Flat Model Software Compensated Crystal Oscillator For GPS Receiver" discloses a GPS receiver having a crystal oscillator with a manufacturer's characteristic curve, a GPS radio, a compensating oscillator temperature sensor and GPS receiver software. The crystal oscillator serves as local reference oscillator for the GPS radio. The GPS receiver software instructs the GPS radio to search radio spectrum for GPS satellite transmissions. Once the combination locks onto a minimum number of GPS satellites it produces a user position fix, the precise crystal oscillator frequency can be measured and associated with the temperature reading from the temperature sensor to software-compensate the local oscillator in later cold-start frequency searches. Junkar *et al.* provide a "flat" SCXO model (software controlled crystal oscillator) which is upgraded with individual calibrations as they are collected over the life of the GPS receiver. During manufacturing of the GPS receiver such SCXO model begins as a device characteristic curve supplied by the crystal manufacturer.
PCT Patent Application Publication No. 01/86316 filed October 30, 2000 by Gronemeyer and published May 8, 2003 as "Calibrated Real Time Clock For Acquisition of GPS Signals During Low Power Operation" discloses a power conservation system in a global positioning system (GPS) receiver which shuts down selected components during periods when the GPS receiver is not actively calculating the GPS receiver location. A low power time keeping circuit accurately preserves GPS time when the selected components are deactivated. When the selected components are turned on in response to a wake-up command, time provided from the low power time keeping circuit, corrected for actual operating temperatures, and data from the GPS clock temperature/frequency table, are used to recalibrate time from a GPS oscillator. Positions of the GPS satellites are then estimated such that the real GPS time is quickly determined from the received satellite signals. Once real GPS time is determined from the detected satellite signals, the selected components are deactivated. The process described above is repeated such that accurate GPS time is maintained by the low power time keeping circuit.

<u>BRIEF DESCRIPTION OF THE DRAWINGS</u>

The embodiments of the present disclosure will now be described by reference to the following figures, in which identical reference numerals in different figures indicate identical elements and in which:
**Figure 1** is a graphical representation of a front view of an example of a mobile communications device to which example embodiments may be applied;
**Figure 2** is a simplified block diagram of the example device of **Figure 1;**
**Figure 3** is a simplified block diagram of a communications environment suitable for the example device of **Figure 1;**
**Figure 4** is a flowchart of operation of the GPS receiver in the example device of **Figure 1;**
**Figure 5** is a flowchart of the self-calibration process for determining oscillator signal variation due to temperature referenced in **Figure 4;**
**Figure 6** is a flowchart of the update process when a temperature condition is undetermined, referenced in **Figure 5;**
**Figure 7** is a flowchart of the update process for rising or falling, temperature conditions referenced in **Figure 5;**

**Figure 8** is a flowchart of the frequency aiding process referenced in **Figure 4;**

**Figure 9** is a flowchart of operation during a GPS receiver test mode in the example device of **Figure 1;** and

**Figure 10** is a graphical representation of example frequency drift characteristics with hysteresis effects as a function of temperature.

## DETAILED DESCRIPTION

The present disclosure provides a method and apparatus for estimating oscillator signal variation due to temperature and providing an estimated frequency to a GPS receiver, to assist the GPS receiver in acquiring a GPS signal with a possibly inaccurate local clock.

A temperature sensor is closely thermal coupled with the crystal of the GPS receiver crystal oscillator or TCXO and during GPS tracking mode, when the error in the oscillator signal is known with precision, outer bounds of TCXO frequency at given temperatures are maintained.

In many instances, these bounds may correspond to rising and falling temperature conditions. During acquisition mode, an estimated frequency value is provided to the GPS receiver based on these two bounds. Depending on the information stored during the tracking mode, and the existing temperature condition, a weighted average of the bounds may be provided. Optionally, an uncertainty factor associated with the frequency estimate also may be provided. By use of the two bounds to take into account the hysteresis effects of the oscillator signal due to temperature, a more accurate initial frequency estimate can be provided to the GPS receiver, thus reducing its average time to first fix.

The present disclosure also accounts for temperature variations in a TCXO signal due to aging of the oscillator since the temperature response of the device is monitored while the GPS receiver is in tracking mode and the two bounds are continuously updated based on the TCXO behaviour. The rate at which the bounds are updated also may be varied, for example, to ensure new outer bound limits are updated quickly and allow for a reduced impact of new sample points lying between the extremities of the bounds in response to narrower hysteresis effects resulting from certain types of temperature history. The bounds of the oscillator response to temperature variation thus gradually shift over time to match the oscillator's response as it ages, while remaining responsive to large changes in behaviour.

According to a first broad aspect of an embodiment of the present disclosure there is disclosed a navigation satellite receiver (260), comprising: a crystal oscillator (263,264) having an operable temperature range, the crystal oscillator (263,264) adapted to generate an input clock signal (267) having an actual frequency that drifts from a nominal frequency over the operable temperature range within outer bounds that shift over time; a temperature sensor (265) thermally coupled with the crystal oscillator (263,264) for taking temperature measurements of the crystal oscillator (263,264); a navigation platform (266) for receiving a plurality of signals having a known transmit frequency from a plurality of navigation satellites (390), the platform (266) being capable of operating: in an acquisition mode in which the navigation platform (266) attempts to receive at least one of the plurality of signals from at least one navigation satellite (390) within a frequency search window that relates to a discrepancy between a nominal and actual frequency of the input clock signal (267); in an operational mode, in which the navigation platform (266) is adapted to receive the plurality of signals from different navigation satellites (390) to obtain a current positional fix for the receiver (260); and a processor (210) for producing, during the operational mode, first and second sets of frequency information, selected from a group consisting of a frequency, frequency difference, frequency offset, frequency error, frequency difference uncertainty, frequency offset uncertainty and frequency error uncertainty, indicative of a discrepancy between the actual and the nominal frequency of the input clock signal (267) determined and applied by the navigation platform (266), as a function of oscillator temperature measurements taken by the temperature sensor (265), wherein the first and second sets represent the respective outer bounds of the frequency information; whereby in acquisition mode, the navigation platform (266) is provided a frequency information estimate derived from data stored in the first and/or second sets of frequency information and accessed using a temperature measurement taken by the temperature sensor (265) to take into account a hysteresis effect of the input clock signal (267) due to temperature, and determines an estimated frequency of the input clock signal (267) used to specify the frequency search window for the current temperature measurement, based on the frequency information estimate.

According to a second broad aspect of an embodiment of the present disclosure there is disclosed a method for providing frequency aiding information, for an input clock signal (267) generated by a crystal oscillator (263,264) having an operable temperature range and having an actual frequency that drifts from a nominal frequency across the operable temperature range within outer bounds that shift over time, to a navigation platform (266) in a navigation satellite receiver (260) comprising a temperature sensor (265) thermally coupled with the crystal oscillator (263,264) for taking temperature measurements thereof, the navigation platform (266) for receiving a plurality of signals having a known transmit frequency from a plurality of navigation satellites (390) and being capable of operating in an acquisition mode in which the navigation platform (266) attempts to receive at least one of the plurality of signals from at least one navigation satellite (390) within a frequency search window that relates to a discrepancy between nominal and actual frequencies of the input clock signal (267), and in an operational mode, in which the navigation platform (266) is adapted to receive the plurality of signals from different navigation satellites (390) to obtain a current positional fix for the receiver (260); the method comprising the acts of: a. in the operational mode: i. obtaining frequency data (510) from the navigation platform (266) indicative of a discrepancy between the actual frequency and the nominal frequency of the input clock signal (267) determined and applied by the navigation platform (266); ii. taking a contemporaneous temperature measurement (520) of the crystal oscillator (263,264); and iii. associating the frequency data (510) with the temperature measurement (520) and updating first and/or second sets of frequency information selected from a group consisting of a frequency, frequency difference, frequency offset, frequency error, frequency difference uncertainty, frequency offset uncertainty and frequency error uncertainty with the frequency data (520), the first and second sets representing the respective outer bounds of frequency information; and b. in the acquisition mode: i. taking a current temperature measurement (805) of the crystal oscillator (263,264); ii. deriving a frequency information estimate from data stored in the first and/or second sets of frequency information and accessed using the current temperature measurement to take into account a hysteresis effect of the input clock signal (267) due to temperature; and iii. determining an estimated frequency of the input clock signal (267) used to specify the search frequency search window for the current temperature measurement, based on the frequency information estimate.

According to a fourth broad aspect of an embodiment of the present disclosure there is disclosed a computer-readable medium (240,250) in a processor (210), in a navigation satellite receiver (260) comprising: a crystal oscillator (263,264) having an operable temperature range, the crystal oscillator (263,264) adapted to generate an input clock signal (267) having an actual frequency that drifts from a nominal frequency over the operable temperature range within outer bounds that shift over time; a temperature sensor (265) thermally coupled with the crystal oscillator (263,264) for taking temperature measurements of the crystal oscillator (263,264); a navigation platform (266) for receiving a plurality of signals having a known transmit frequency from a plurality of navigation satellites (390), the platform (266) being capable of operating: in an acquisition mode in which the navigation platform (266) attempts to receive at least one of the plurality of signals from at least one navigation satellite (390) within a frequency search window that relates to a discrepancy between a nominal and actual frequency of the input clock signal (267); in an operational mode, in which the navigation platform (266) is adapted to receive the plurality of signals from different navigation satellites (390) to obtain a current positional fix for the receiver (260); the medium (240,250) having stored thereon, computer-readable and computer-executable instructions which, when executed by the processor (210), cause the processor (210) to perform acts comprising: a. in the operational mode: i. obtaining frequency data (510) from the navigation platform (266) indicative of a discrepancy between the actual frequency and the nominal frequency of the input clock signal (267) and determined and applied by the navigation platform (266); ii. taking a contemporaneous temperature measurement (520) of the crystal oscillator (263,264); and iii. associating the frequency data (510) with the temperature measurement (520) and updating first and/or second sets of frequency information selected from a group consisting of a frequency, frequency difference, frequency offset, frequency error, frequency difference uncertainty, frequency offset uncertainty and frequency error uncertainty, with the frequency data (510), the first and/or second sets representing the respective outer bounds of frequency information; and b. in the acquisition mode: i. taking a current temperature measurement (805) of the crystal oscillator (263,264); ii. deriving a frequency information estimate from data stored in the first and/or second sets of frequency information and accessed using the current temperature measurement to take into account a hysteresis effect of the input clock signal (267) due to temperature; and iii. determining an estimated frequency of the input clock signal (267) used to specify the frequency search window for the current temperature measurement, based on the frequency information estimate.

The present disclosure will now be described for the purposes of illustration only, in conjunction with certain embodiments shown in the enclosed drawings.

**The Communications Device**

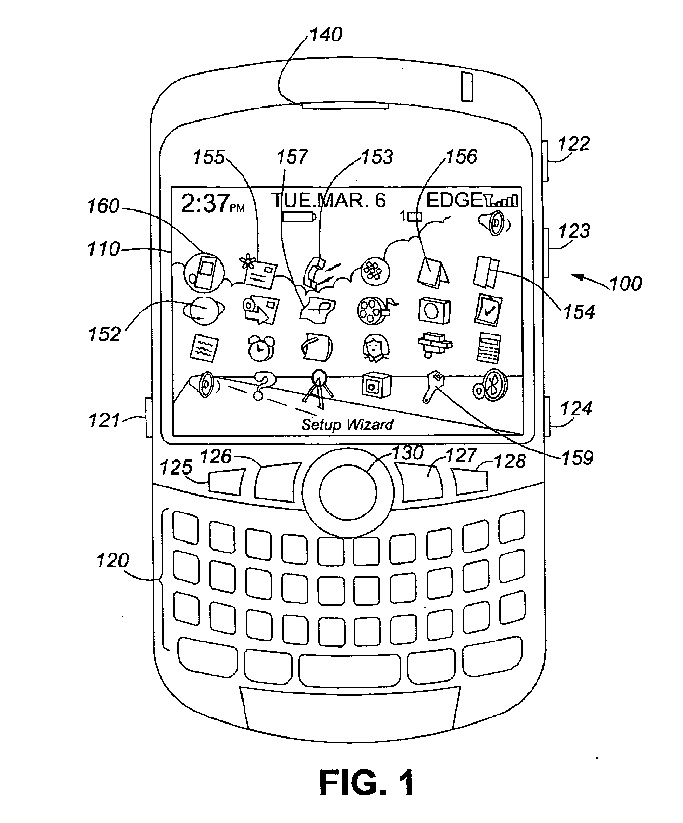

Referring now to the drawings, **Figure 1** is a graphical representation of a front view of an example of an electronic communications device **100** to which example embodiments described herein can be applied. The communications device **100** is a two-way mobile communications device having electronic messaging communications capabilities and possibly also voice communications capabilities. Depending on the functionality provided by the communications device **100,** in various embodiments the communications device **100** may be a data communications device, a multiple-mode communications device configured for both data and voice communication, a mobile telephone, a PDA enabled for wireless network communications, a computer system with a wireless modem or wireless network card, or a computer or phone device with a fixed connection to a network, among other things. The communications device **100** is, in at least one example embodiment, a handheld device having a casing or housing that is dimensioned to fit into a purse, pocket or belt-mounted device holster.

The communications device **100** includes a display screen **110,** an alphanumeric keyboard or keypad **120,** optionally one or more non-keyboard inputs, such as buttons **121 - 128** and/or a rotatable input device such as a trackball **130** or scrollwheel (not shown) and a speaker **140.** In some example embodiments keys in the keyboard **120** may contain one or more letters aligned in a QWERTY layout. In some embodiments the keys in the keyboard **120** may not be actual physical keys but may be virtual keys displayed on a touch screen display. In some example embodiments, the keyboard **120** includes a QWERTZ layout, an AZERTY layout, a Dvorak layout, or the like. In some example embodiments, the keyboard **120** layout has reduced keys, such as a reduced QWERTY layout.

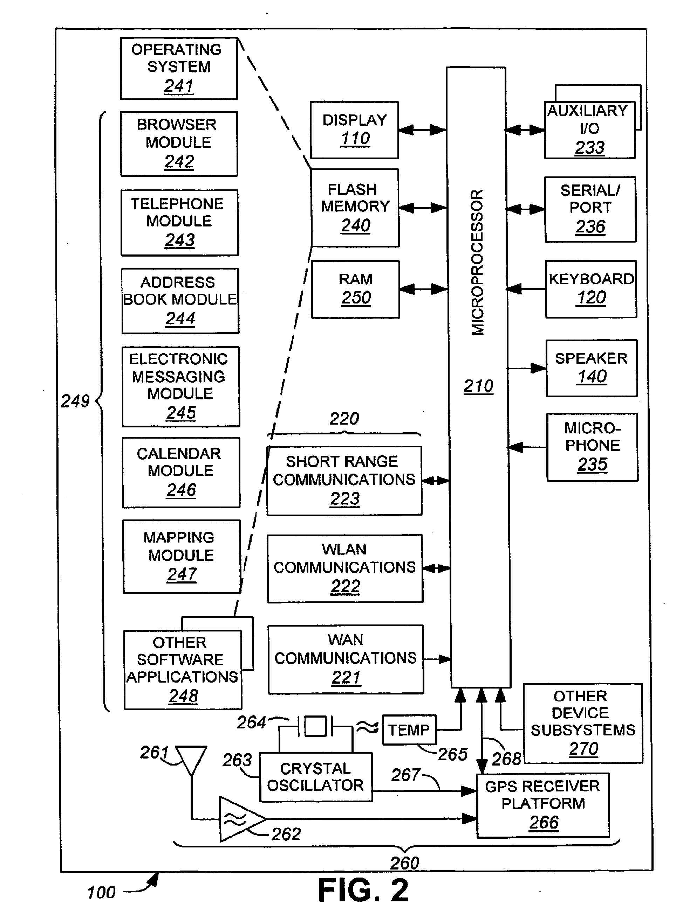

Referring now to **Figure 2,** the communications device **100** includes a controller that includes at least one microprocessor **210** for controlling the overall operation of the device **100**. The microprocessor **210** interacts with a communications subsystem shown generally at **220** and with further device subsystems such as display **110,** keyboard or keypad **120,** one or more auxiliary input / output (I/O) subsystems or devices **233** (e.g. trackball **130,** non-keyboard inputs **121-128** or a scrollwheel (not shown)), a speaker **140,** a microphone **235,** a serial port **236,** a flash memory **240,** random access memory (RAM) **250,** a global positioning system (GPS) or navigation satellite receiver **260,** and any other device subsystems generally designated as **270.**

The microprocessor **210** operates under stored program control of the operating system software and/or firmware **241** and various software and/or firmware disclosures **249** used by the microprocessor **210,** which are, in one example embodiment, stored in a persistent store such as flash memory **240** or similar storage element. Those skilled in the art will appreciate that the operating system **241,** software disclosures shown generally at **249,** or parts thereof, may be temporarily loaded into a volatile store such as RAM **250.**

The microprocessor **210,** in addition to its operating system functions, in example embodiments, enables execution of software applications **249** for interacting with the various device subsystems of the device **100.** A predetermined set of software applications **249,** which control basic device operations, including data and voice communication applications, such as a browser module **242,** a telephone module **243,** an address book module **244,** an electronic messaging module **245** (which may include e-mail, SMS messaging and/or PIN messaging) and a calendar module **246,** for example, will normally be installed on the communications device **100** during manufacture. Further software applications **249,** such as a mapping module **247,** may also be loaded onto the communications device **100** during manufacture, or through the communications subsystem **220,** the auxiliary I/O subsystem **233,** serial port **236,** or any other suitable subsystem **270,** and installed in the RAM **250** or a non-volatile store such as the flash memory **240** for execution by the microprocessor **210.** Such flexibility in application installation increases the functionality of the device **100** and may provide enhanced on-device functions, communication-related functions, or both. In some embodiments, some or part of the functionality of the functional modules can be implemented through firmware or hardware components instead of, or in combination with, computer software instructions executed by the microprocessor **210** (or other processors).

Under instructions from various software applications **249** resident on the communications device **100,** the microprocessor **210** is configured to implement various functional components or modules, for interacting with the various devices subsystems of the device **100.**

The web browser module **242** permits access to a specified web address, for example via data transfer over one or more of the communications subsystem **220** components.

The telephone module **243** enables the communications device **100** to transmit and receive voice and/or data over one or more of the communications subsystem **220** components.

The address book module **244** enables address book information, such as telephone numbers, email and/or instant text messaging addresses and/or PIN numbers to be stored and accessed on the communications device **100.**

The electronic messaging module **245** enables the communications device **100** to send and receive electronic messages over one or more of the communications subsystems **220** components. Examples of electronic messaging include email, personal identification number (PIN) messaging and/or short message service (SMS) messaging.

The calendar module **246** enables appointment and/or task information to be stored and accessed on the communications device **100.**

The mapping module **247** provides location-based services relative to the current location of the device **100,** including but not limited to storage, access and/or retrieval of detailed mapping information on the communications device **100** and provision of turn-by-tum directions from an initial map position to a desired destination map position in accordance therewith. Other location-based service modules (not shown) may include the E911 cellular phone positioning initiative of the Federal Communications Commission (FCC).

Referring briefly to **Figure 1** again, there is shown an example of handheld communications device **100** on which a plurality of user selectable icons are shown on its display screen **110.** The icons are each associated with functions that can be performed by the communications device **100.** For example, **Figure 1** shows a browser icon **152** for accessing web browsing functions (associated with browser module **242),** a "Phone" icon **153** for accessing phone functionality (associated with telephone module **243),** an "Address Book" icon **154** for accessing address book functions (associated with address book module **242),** a "Messages" icon **155** for accessing electronic messaging functions of the communications device **100** (associated with electronic messaging module **245),** a "Calendar" icon **156** for accessing calendar functions (associated with calendar module **246),** a "Maps" icon **157** for accessing mapping functions (associated with mapping module **247),** and an options icon **159** (associated with an options module, which may be a separate module or executed by one or more existing modules). An icon **150** is shown highlighted or focused by a caret or selection symbol **160** which can be navigated by a device user among the displayed icons through manipulation of the trackball **130** (or other navigational input device). The trackball **130** is also depressible, such that depression of the trackball **130** when an icon is highlighted or focused by selection symbol **160** results in the launch of functions of the associated module.

Each of the software disclosures **249** may include layout information defining the placement of particular fields, such as text fields, input fields, etc., in a user interface for the software disclosure **249.**

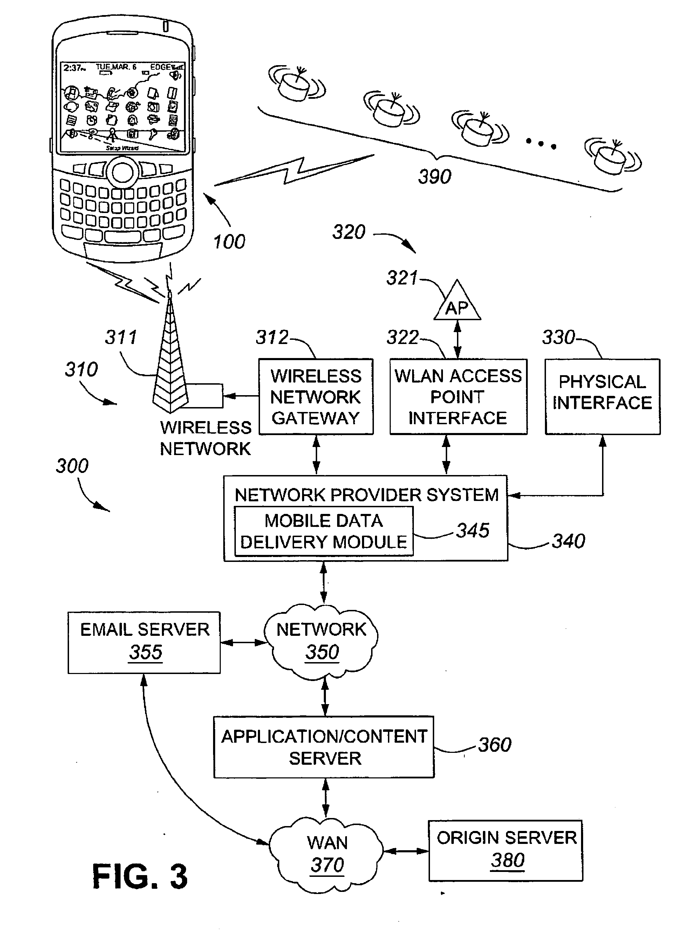

In **Figure 2,** the communications subsystem **220** acts as an interface between the communications device **100** and a communications environment **300** shown in **Figure 3.** As will be apparent to those skilled in the field of communications, the particular configuration of the communications subsystem **220** will be dependent upon the communications network(s) in the communications environment **300** in which the communications device 100 is intended to operate.

In **Figure 3,** the communications environment **300** is shown to include one or more mobile electronic devices **100** (only one of which is shown in **Figure 3),** a wireless Wide Area Network (WAN) **310** and associated base station **311,** a Wireless Local Area Network (WLAN) **320,** and/or other interfaces. In some example embodiments, the communications device **100** is configured to communicate in both data and voice modes over both wireless WAN and WLAN networks and to roam between such networks.

Thus, in the example embodiment shown in **Figure 2,** the communications subsystem **220** includes a WAN communications module **221,** a WLAN communications module **222** and a short range communications module **223.**

The wireless WAN communications module **221** is for two-way communications with the wireless WAN **310** and the WLAN communications module **222** is for two-way communications with the WLAN **320** along an access point **321** associated therewith. According to one embodiment, the WAN **221** and WLAN **222** communications modules include respective antennas (not shown), RF transceivers (not shown), and some signal processing capabilities, implemented, for example, by a digital signal processor (not shown).

The short-range communications subsystem **223** may provide for communication between the communications device **100** and different systems or devices, which need not necessarily be similar devices. For example, the short-range communications module **223** may include an infrared device and associated circuits and components and/or a Bluetooth™ communications module to provide for communication with similarly enabled systems and devices.

In a data communications mode, a received signal such as a text message or web page download will be processed by the communications subsystem **220** and output to the microprocessor **210,** which further processes the received signal for output to the display **110,** or alternatively to an auxiliary I/O device **233.**

The keyboard **120** and other various input devices, including, an auxiliary I/O device **233** (such as the buttons **121-128** and the trackball **130)** and/or the microphone **235** on the communications device **100** may also be used to compose data items within the software applications **249,** such as email messages or voice communications, in conjunction with the display **110,** possibly an auxiliary I/O device **233** and/or the speaker **140.** Such composed items and/or voice communications may then be transmitted and received over a communications network in the communications environment **300** through the communications subsystem **220.**

The serial port **236** comprises a USB-type interface port for interfacing or synchronizing with another device, such as a desktop computer (not shown). The serial port **236** is used to set preferences through an external device or software application. The serial port **236** may also be used to extend the capabilities of the communications device **100** by providing for information or software downloads, including user interface information, to the communications device **100.**

The flash memory **240** or other persistent storage of the communications device **100** may house, in addition to software and/or firmware stored program instructions, certain information including address book information such as telephone numbers, email and/or instant text messaging addresses and PIN numbers. Such information may also be at least partially stored at least some of the time in memory of a Subscriber Identity Module (SIM) card (not shown) used with the communications device **100,** in volatile device memory (such as the RAM **250),** and/or at a location accessible to the communications device **100** over WAN **310.**

Additionally, the flash memory **240** may be used to store data structures, preferences and/or parameters, including upper and/or lower bounds of crystal oscillator frequency estimates at various temperatures in the GPS receiver subsystem **260.**

The RAM **250,** which may constitute non-volatile or volatile memory, with or without battery backup, may be used as a supplement to, or in place of, flash memory **240,** and to maintain data and/or program instructions for use by the microprocessor **210** in executing one or more of the functions of operating system **241** and/or the software applications **249,** including but not limited to the mapping module **247.**

The navigation satellite receiver **260** may comprise an antenna **261,** an amplifier **262,** a crystal oscillator **263,** a crystal **264,** a temperature sensor **265** and a GPS or navigation platform or module **266.** Those having ordinary skill in this art will readily appreciate that while the American Global Positioning System (GPS) is referenced in some instances throughout, methods and apparatus described in this disclosure may equally be used in conjunction with other types of global or regional navigation satellite systems, including but not limited to the European Galileo, Russian GLONASS and Chinese Beidou Compass systems.

The antenna **261** is a passive receive-only antenna and is connected to the amplifier **262.** The amplifier **262,** which may be a low noise amplifier (LNA), is connected to the antenna **261** and to the navigation platform **266.** It amplifies high-frequency low power signals received from the GPS satellites **390** as discussed below and forwards them to the navigation platform **266.** Filters (not shown) may also be inserted in the receive signal path to suppress out of band interferences, such as between the antenna **261** and the amplifier **262,** and/or between the amplifier **262** and the navigation platform **266.**

The crystal oscillator **263** is connected to the crystal **264,** which may preferably be a quartz crystal, and to the navigation platform **266.** It makes use of high-Q resonance of the piezoelectric effect from the crystal **264** and generates a periodic input clock signal **267** for use by the navigation platform **266.** Typically, the input clock signal **267** is free-running and around a specific nominal frequency. However, due to factors such as temperature, voltage, loading, aging and manufacturing variations, the actual frequency is not typically exactly equal to the nominal frequency. In an example embodiment, the input clock signal **267** is generated at a nominal frequency of 16.369 MHz, however other nominal frequencies could be utilized.

As is typical with such structures, the crystal **264** will have a frequency drift error that varies roughly as a function of temperature. A typical uncompensated crystal **264** and oscillator **263** set may exhibit considerable operating frequency error, exhibited by drift of $\pm50$ parts per million (ppm), with rates of change as a function of temperature of up to about 0.03 ppm per $°C^2$.

Typically, a crystal oscillator signal **267** exhibits a hysteresis effect, which varies depending on temperature and its history, such as the rate of change of temperature, whether temperature is rising or falling, and in what range the temperature is changing. This is discussed in Raymond L. Filler, "Measurement and Analysis of Thermal Hysteresis in Resonators and TXCO's" (42nd Annual Frequency Control Symposium, 1998).

The crystal **264** and oscillator **263** may in some example embodiments be a temperature compensated crystal oscillator (TCXO) module in which compensation components (not shown) have been added to enhance the temperature stability of the basic oscillator to improve performance. Nevertheless, while reduced, a TCXO will also exhibit some frequency drift as a function of temperature as well as hysteresis effects.

The temperature sensor **265,** which is connected to the microprocessor 210, may be a hand-trimmed compensation thermistor that is converted to a digital reading by an analog to digital converter (not shown). In an example embodiment, a 10 digit digital value may be derived from the temperature sensor reading. Preferably, it is hardware optimized such that the expected temperature range (for example, -20°C to +80°C) spans the entire range of the analog to digital converter. Alternatively, the temperature sensor **265** may be a digital temperature sensor, such as the 12-bit model TMP102 sensor manufactured by Texas Instruments.

The temperature sensor **265** is physically positioned in close proximity to the crystal **264** and oscillator **263** and preferably on a common thermal contour line relative to major heat sources on the underlying circuit board, such as power amplifiers. For even better thermal coupling, the temperature sensor may advantageously be installed inside the module that houses the quartz crystal **264.**

The microprocessor **210** periodically samples the temperature reported by the temperature sensor **265.** Advantageously, the sampling rate corresponds to and is preferably closely in phase with a report period of a message containing frequency information reported from the navigation platform **266.** Such frequency information may include a frequency offset or correction factor applied by the navigation platform **266** to re-achieve the accurate frequencies used internally in the navigation platform **266,** with or without an uncertainty associated with the reported offset.

The navigation platform **266** is a conventional GPS or A-GPS receiver platform, such as the GSC3 LTi GPS chip manufactured by SiRF Technology, Inc. Preferably, the navigation platform **266** has a bi-directional communications link **268** with the microprocessor **210** to permit the exchange of data and control messages in compliance with the Assisted GPS (A-GPS) enhanced performance system. A-GPS permits the navigation satellite receiver **260** to make use of an assistance server (not shown) to reduce the time required by the receiver to lock-on to an initial positional fix, or Time To First Fix (TTFF), which may be considerable in poor signal conditions, such as in a high multipath environment occasioned by tall buildings, being indoors or under trees.

One example of A-GPS may be related to the advent of the FCC's E911 mandate requiring the position of a cell phone to be available to emergency call dispatchers. Under an A-GPS system, a GPS subsystem embedded in or coupled to a cellular phone may benefit from aiding information provided to it by the wireless network. Such information may range from an approximate location based on identification of with which cell site the phone is connected, the time of day, and/or provision of GPS satellite navigation data, which may be used in the GPS receivers to derive orbital data on the position of the GPS satellites **390,** or used to enhance processing gain for improved sensitivity. Additionally, an assistance server may provide information on ionospheric conditions and other errors affecting the GPS signal.

## The Communications Environment

Turning now to **Figure 3,** the WAN **310** may be implemented as a packet-based cellular network that includes a number of base stations **311** (only one of which is shown), where each of the base stations **311** provides wireless Radio Frequency (RF) coverage to a corresponding area or cell. The wireless WAN **310** is typically operated by a cellular network service provider that sells subscription packages to users of mobile electronic devices. The WAN **310** comprises a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), IDEN (Integrated Digital Enhanced Network) or various other third generation networks such as EDGE (Enhanced Data rates for GSM Evolution) or UMTS (Universal Mobile Telecommunications Systems).

The communications environment **300** also includes a wireless network gateway **312** and one or more network provider systems **340.** The wireless network gateway **312** provides translation and routing services between the network provider system(s) **340** and the WAN **310,** which facilitates communication between the mobile electronic devices **100** and other devices (not shown) connected, directly or indirectly, to the network provider system **340.** The WAN **310** may also include location-based service services (not shown) to provide applications and/or GPS assistance.

The WLAN **320** comprises a network which, in some example embodiments, conforms to IEEE 802.11 standards such as 802.11b and/or 802.11g; however, other communications protocols may also be used for the WLAN **320.** The WLAN **320** includes one or more wireless RF Access Points (AP) **321** (one of which is shown), that collectively provide a WLAN coverage area. The WLAN **320** may be operated by an enterprise (for example, a business or university) and the access points **321** are connected to an access point (AP) interface **322.** The AP interface **322** provides translation and routing services between the access points **321** and the network provider system **340** to facilitate communication between the mobile electronic devices **100** and other devices (not shown) connected directly or indirectly, to the network provider system **340.** The AP interface **322** is implemented using a computer, for example, a server running a suitable computer program or software.

According to one embodiment, other interfaces may be implemented using a physical interface **330.** The physical interface **330** may include an Ethernet, Universal Serial Bus (USB), Firewire and/or infrared (IR) connection implemented to exchange information between the network provider system **340** and the communications device **100** when physically connected therewith.

The network provider system **340** comprises a server which is located behind a firewall (not shown). The network provider system 340 provides access for the communications device **100,** through either the WAN **310,** the WLAN **320,** or one of the physical interfaces **330** to the devices connected, for example, through an enterprise network **350** (e.g. an intranet), to the network provider system **340,** such as a network **350,** an email server **355,** one or more disclosure/content servers **360,** a second WAN **370** and/or an origin server **380.**

According to one embodiment, a mobile data delivery module **345** provides HTTP connectivity between the wireless WAN **310** and the WLAN **320** and the other physical connections **330** and devices and/or networks connected directly or indirectly to the network provider system **340.** In one embodiment, the mobile data delivery module **345** is implemented on a computer, such as one housing the network provider system **340.** The network **350,** the email server **355,** the disclosure/content server **360,** the second WAN **370** and the origin server **380** are individually and/or collectively in various combinations, a content source for the network provider system **340.** It will be appreciated that the system shown in **Figure 3** comprises one possible communications network or configuration for use with the mobile communication device **100.**

The network **350** may comprise a local area network, an intranet, the Internet, a direct connection, or combinations thereof. According to one embodiment, the network **350** comprises an intranet for a corporation or other type of organization.

In one example configuration, the email server **355** is connected to the network **350.** This server **355** is configured to direct or redirect email messages received over the second WAN **370** and internally within the enterprise network **350** to be addressed to the mobile electronic device **100.**

The disclosure/content server **360** may be connected to the network 350 and also to another network, for example, the second WAN **370.**

The second WAN **370** may further connect to other networks. In one embodiment, the second WAN **370** comprises or is configured with the Internet, a direct connection, a LAN, a wireless communication link, or any combination thereof.

Content providers, such as the origin server **380,** or Web servers, may be connected to the second WAN 370.

## The Global Positioning System (GPS)

The communications environment **300** may also include a network of Global Positioning System (GPS) satellites **390.** The concept of the Global Positioning System was originally proposed as a worldwide means of navigation for the US military. It originally consisted of a series of 24 satellites **390** in orbit at an altitude of about 20,200 kilometers above the earth's surface. As of September 2007, there are 31 actively broadcasting satellites in the GPS constellation. The additional satellites improve the precision of the navigation satellite receiver **260** calculations by providing redundant measurements.

This high orbit, which lies well above the earth's atmosphere, yields a very precise and stable orbit that may be very accurately measured by a ground station. The orbit of each satellite is monitored twice daily by each of five monitoring stations.

The position of each satellite **390** is known at any given time, including minor adjustments for gravitational effects of other planetary bodies, such as the sun and moon. Typically, this information is stored in an almanac within each navigation satellite **260,** subject to periodic adjustments through message signals transmitted by each of the satellites **390.**

Each satellite **390** makes a complete orbit every 11 hours, 58 minutes, 2 seconds. The original constellation was spread out in six orbital planes. Thus, at any given point in time, from any point on earth, at least four or five satellites **390** may lie above the horizon and thus remain in view. With the increased number of satellites, the constellation was changed to a non-uniform arrangement shown to improve reliability and availability of the system upon a multiple satellite failure, relative to the former uniform system.

Each satellite **390** continuously transmits high-frequency, radio signals comprising a coded message that contain timing information and data about the satellite's orbit. One of the frequency channels, denoted L1, is typically used by GPS applications for the general public. Other channels, denoted L2, L3, L4 and L5, are also defined and used by specific applications such as the U.S. military's special receivers. Some of them may also be used by certain civilian applications. These signals (such as on L1) are received by antenna **261,** amplified by amplifier **262** and forwarded to the GPS receiver platform **266.**

Each signal consists of a coded pseudo-random timing signal generated using a common reference clock signal and a message signal that identifies the transmitting satellite **390** and from which its position may be precisely determined, in conjunction with the almanac.

Each GPS receiver, such as the navigation platform **266** implemented in the mobile device **100,** makes use of the pseudo-random timing signal from typically at least four different satellites **390.** The signals from each of these satellites **390** are fully and precisely synchronized with each other.

The delay between the signals received by the navigation platform **266** from the satellites **390** and the signal generated by it when synchronized thereto may be used to derive the exact distance between the corresponding satellite **390** and the receiver platform **266,** by multiplying the delay by the speed of light.

Thus, with each received signal, the position of the navigation satellite receiver 260 is constrained to lie on the surface of an imaginary sphere having a diameter equal to the distance between the navigation satellite receiver **260** and the transmitting satellite 390 and centered about the known position of the transmitting satellite 390.

The position of the navigation satellite receiver **260** may thus be obtained by trilateration. With data from only three satellites **390,** a geographic non-elevation two-dimensional fix may be obtained, while a three-dimensional fix including elevation may be obtained with data from a minimum of four satellites **390.** The most accurate positional fix will be obtained from satellites **390** widely distributed across the sky.

In addition to a positional fix, accurate time of day and velocity information may be deduced from the signals transmitted by the satellites **390.**

Optimal reception is obtained when the navigation satellite receiver **260** is situated outdoors and with good visibility to most of the sky. Significantly degraded performance may be obtained when the navigation satellite receiver **260** is situated indoors, in caves or in deep canyons where sky visibility may be severely restricted. Typically, clouds or bad weather do not degrade receiver performance.

Clearly, the performance and accuracy of the navigation satellite receiver **260** is dependent upon the accurate synchronization of the coded timing signals transmitted by each satellite **390.** Precision, accuracy and synchronicity of the timing information as between the satellites **390** is maintained through the use of several atomic reference clocks in the satellite **390,** which are used to generate and synchronize the reference clock signals used to encode the coded timing signals to a common reference clock frequency.

Typically, the navigation satellite receiver **260** contains a fixed, free-running clock oscillator circuit **263,** making use of a quartz crystal **264** to determine its frequency.

With the use of atomic reference clocks, each of the signals transmitted by the GPS satellites **390** has an accurate transmit frequency. However, such is not necessarily the case when arriving at the antenna **261.** Generally, the received signals will be shifted in frequency due to the Doppler effect. The velocity of movement of either or both of the satellites **390** and the navigation satellite receiver 260 may contribute to the Doppler frequency shift.

The problem of properly receiving the transmitted satellite signals is exacerbated by any discrepancy between the actual frequency of the navigation satellite receiver **260** input clock signal **267** and its nominal value. Such discrepancy contributes to an apparent frequency shift of the incoming GPS signals seen by the navigation satellite receiver **260.**

Absent the provision of any aiding information initially, the amount of Doppler shift may not be accurately known and any apparent frequency shift will not be known. Accordingly, the navigation satellite receiver **260** typically searches for the satellite signals over a range of frequency hypotheses that may be defined by a frequency search window. In addition, although not strictly relevant to the present disclosure, the navigation satellite receiver **260** also searches over a range of propagation delay hypotheses that may be defined by a time search window. Conventionally, the frequency search window and the time search window are treated as a single two-dimensional search window.

The dimensions of the search window have a significant impact on the performance of the navigation receiver **260.** If the search window is set too narrow, there is a risk that the incoming signal frequency lies outside it. If so the search will fail unless the search window is expanded. If the search window is set too wide, it will take more time on average to find the signal, which, unnecessarily increases the Time To First Fix.

The navigation satellite receiver **260** may be thought of operating in one of two modes. The first, or acquisition, mode extends from power up, reset or loss of positional lock, until a first fix has been obtained. The second, or operational, navigational or tracking, mode extends from the Time To First Fix until positional lock has been lost, such as through reset or power down or adverse conditions.

Thus, upon startup, the navigation satellite receiver **260** enters the acquisition mode, establishes an initial search window and looks for satellite signals within the search window over time and frequency. If sufficient satellite signals cannot be identified within the search window, the search fails unless the search window is expanded.

Thus, it is preferable to establish a search window that is as narrow as possible to ensure receipt of sufficient satellite signals to achieve signal lock and enter the operational mode. This would minimize the time spent in the acquisition mode and correspondingly, the average Time To First Fix. Once it has received timing signals from typically 4 satellites **390,** the navigation satellite receiver **260** is able to calculate a position fix and additionally, quantify any discrepancy between the actual and nominal frequency of the input clock signal **267** generated by the clock oscillator circuit **263** and the crystal **264,** by assuming that the distance measurements to each satellite **390** are accurate and the satellite orbit information is known.

If the actual frequency of the input clock signal **267** generated by the clock oscillator **263** and the crystal **264** were capable of being accurately estimated and provided to the navigation satellite receiver **260,** such frequency aiding could be employed to permit the navigation satellite receiver **260** to reduce the time spent in acquisition mode. Preferably, if an estimate of any Doppler shift of the satellites may be obtained in a manner known to those having ordinary skill in this art (being beyond the scope of the present invention), this would further improve the quality of the initial search window.

A number of techniques are known for estimating or measuring and compensating for oscillator signal frequency variation due to temperature. In U.S. Patent No. 5,654,718, issued August 5, 1997, Beason et al. disclose a device and method for calculating and storing the frequency offset of a crystal oscillator signal over a range of temperatures during the operation of a GPS receiver. The frequency offset is then used when the receiver is in the acquisition mode to improve or compensate for the frequency of the oscillator signal.

In U.S. Patent No. 6,509,870, issued January 21, 2003, Matsushita et al. disclose a GPS receiver in which the temperature of the local oscillator crystal is measured and recorded in association with frequency, wherein the data is used to create a ninth order polynomial representing frequency drift error versus temperature.

In U.S. Patent No. 6,630,872, issued October 7, 2003, Lanoue et al. disclose a method for generating a thermal model of a digital compensation crystal oscillator (DCXO), estimating the temperature of the oscillator based on the thermal model and providing an output signal representing the oscillator signal frequency based on the measured temperature.

In U.S. Patent No. 7,148,761, issued December 12, 2006, Shieh discloses a GPS receiver in which a plurality of lower-order polynomial equations are used to represent frequency drift errors over discrete temperature ranges.

These known techniques involve complex mathematical modelling, all of which rely on the simplified and generally inaccurate assumption that the frequency drift error of the oscillator has a single value at a given temperature.

Thus, the above techniques do not address the fact that the oscillator signal performance as a function of temperature is complex and also may depend, at least in part, on whether the temperature is in a rising or falling trend.

For many applications, the navigation satellite receiver **260** spends the majority of time in operational mode, during which the actual frequency of the clock signal that corresponds with that of the satellites **390** is known. Frequency data about the input clock signal **267** provided by the crystal **264** and oscillator **263** may therefore be accurately obtained and stored, by which more accurate frequency information (e.g. frequency offset and possibly uncertainty) may be provided to the navigation platform **266** during subsequent acquisition attempts.

This frequency information is maintained in one or more compensation tables, which may be maintained in flash memory **240** or other non-volatile data storage.

In an example embodiment, a pair of compensation tables R and F are maintained, corresponding to empirical values obtained during previous instances of the operational mode. In recognition of the hysteresis effect of frequency as a function of temperature, the compensation tables correspond to a rising and to a falling temperature trend. The purpose of each table is to specify the widest possible frequency uncertainty range for a given temperature index value and a temperature trend known to the navigation satellite **260** due to the hysteresis effect.

Accordingly, when a measured frequency offset value is found to lie outside the then extant hysteresis loop, signifying a new outer boundary of the loop, the appropriate table is updated quickly. On the other hand, when the measured frequency offset value is found to lie within the then extant hysteresis loop, the table need not be updated at all, or optionally, in order to incorporate gradual changes to the temperature response of the navigation satellite receiver **260** due to aging and other long-term effects, at least updated more slowly.

In an alternative embodiment, the pair of compensation tables may be maintained corresponding to upper and lower bounds of frequency offset respectively, in recognition of the hysteresis effect of frequency as a function of temperature. If, during the operational mode, a measured frequency offset value is found to be higher than the then extant upper bound at a given temperature index, the corresponding upper bound table entry is replaced by the newly found upper bound value. If a measured frequency offset value is found to be lower than the then extant lower bound at a given temperature index, the corresponding lower bound table entry is replaced by the newly found lower bound value; and if a measured frequency offset value is found to be between the upper and lower bounds for the temperature, the table values are left undisturbed.

In either scenario, each compensation table may consist of a two column table of data entries, one corresponding to an index temperature value and the other corresponding to a corresponding frequency offset value. Alternatively, the temperature may be implicitly represented by the index of the table elements of a single column table, where the column stores frequency offset information. In the further alternative, the navigation platform **266** may not only report frequency offset but also the estimated measurement uncertainty during the operational mode, in which case an additional column may be added in each table to store this information.

Preferably, the compensation tables may be sized to contain a series of index temperature values that span over the useful portion of the digital operational temperature range of the temperature sensor **265,** and to a sufficient precision, for example, 128 entries long, with each entry constituting a 7-bit temperature reading. The word length of the entries may also be sufficient, for example, a signed 16 bit word in this example embodiment, to hold frequency offset values in Hz, which may be, for example referenced at the GPS L1 frequency. In such a situation, a 16 bit value is able to represent up to $\pm 20$ ppm of frequency offset.

While in some example embodiments, the index temperature values are evenly spread across the digital operational temperature range, those having ordinary skill in this art will appreciate that if the temperature sensor **265** has a nonlinear voltage relation to the temperature values, the index temperature values may not evenly span over this temperature range.

Preferably, the frequency offset values are initialized to an unlikely value such as $-2^{15} = -32768$, which will represent a blank or untrained temperature value.

## **Operation**

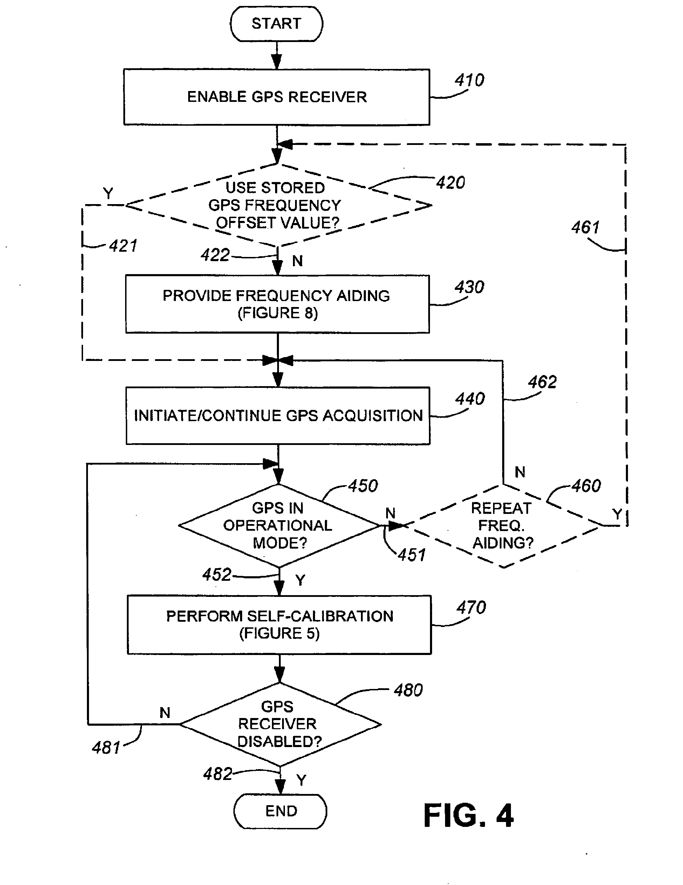

As illustrated in **Figure 4,** which shows example processing steps for the navigation satellite receiver **260,** when the navigation satellite receiver **260** is reset or powered on, it is enabled **410** and attempts to acquire the GPS signal, as described above. Because the navigation satellite receiver **260** does not know the exact frequency of the local oscillator **263** input clock signal **267,** the navigation satellite receiver **260** searches for the signal within a defined frequency window. If the search window is too narrow, due to the value of the oscillator frequency offset, the GPS signal will fall outside the window and the navigation satellite receiver **260** will not find the signal. If the window is too wide, it would take longer on average to find the signal. Therefore, it is advantageous to determine the narrowest possible search window that will guarantee that the GPS signal is bracketed in frequency.

Optionally, the navigation satellite receiver **260** first determines **420** (shown in dashed outline to indicate an optional step) if it is able to rely on a fresh frequency offset value stored during its recent operation, in order to narrow the uncertainty in the size of its initial search window. The stored frequency offset value corresponds to a TCXO offset value estimated during the previous GPS operation. Usually, in a "hot restart" of the navigation satellite receiver **260,** such stored information is available and fresh, and it is assumed that there is little concern that the ambient temperature of the oscillator **263** has significantly changed. The determination whether a stored frequency offset is "fresh" can be based on the time since the last GPS operation in operational mode. It may also be further, or in the alternative, based on the temperature change since the last GPS operation.

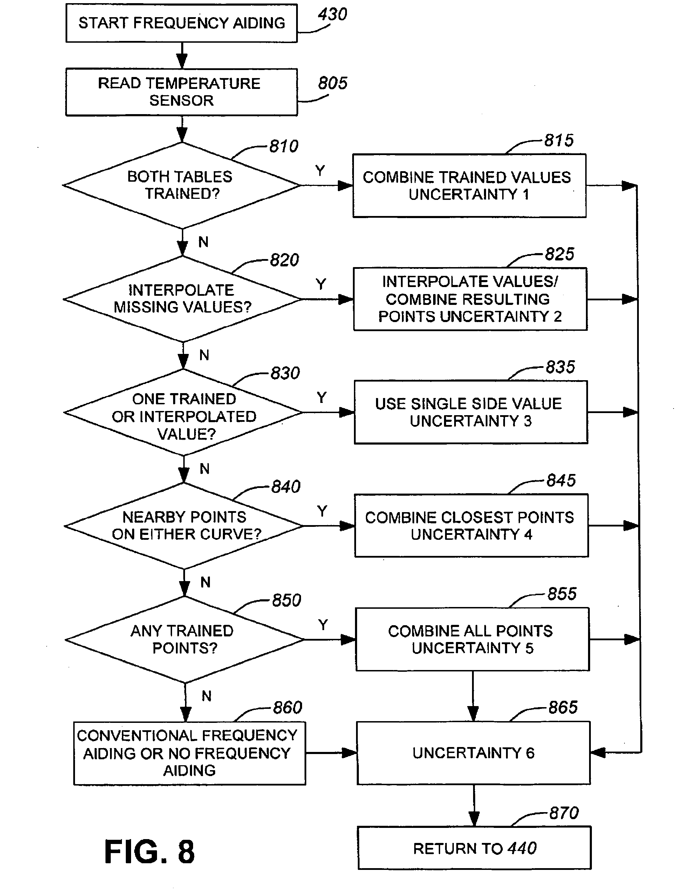

If so **421,** it proceeds to step **440.** If not **422,** for example, because it is proceeding from a warm start or cold start, it proceeds to make use of frequency aiding **430,** as described below and shown in **Figure 8.**

If step **420** is not followed, the navigation satellite receiver **260** proceeds directly to the step of providing frequency aiding **430.** In either event, once frequency aiding has been provided **430,** it initiates GPS acquisition **440** using an initial estimate obtained in the frequency aiding step **430.**

At periodic intervals, a determination is made as to whether the navigation satellite receiver **260** has successfully entered operational mode **450** and remains in such mode. If not **451,** it may optionally determine **460** (shown in dashed outline to indicate an optional step) whether additional frequency aiding is appropriate, for example, when there has been a precipitous change in the ambient or circuit board temperature, the device **100** has been moved into a different area with different temperature, or the on-board radio is turned on or turned off. If so **461,** it proceeds to step **420.** If not **462,** it proceeds to step **440.**

If step **460** is not followed, it proceeds directly to step **440** to continue the acquisition of GPS signals.

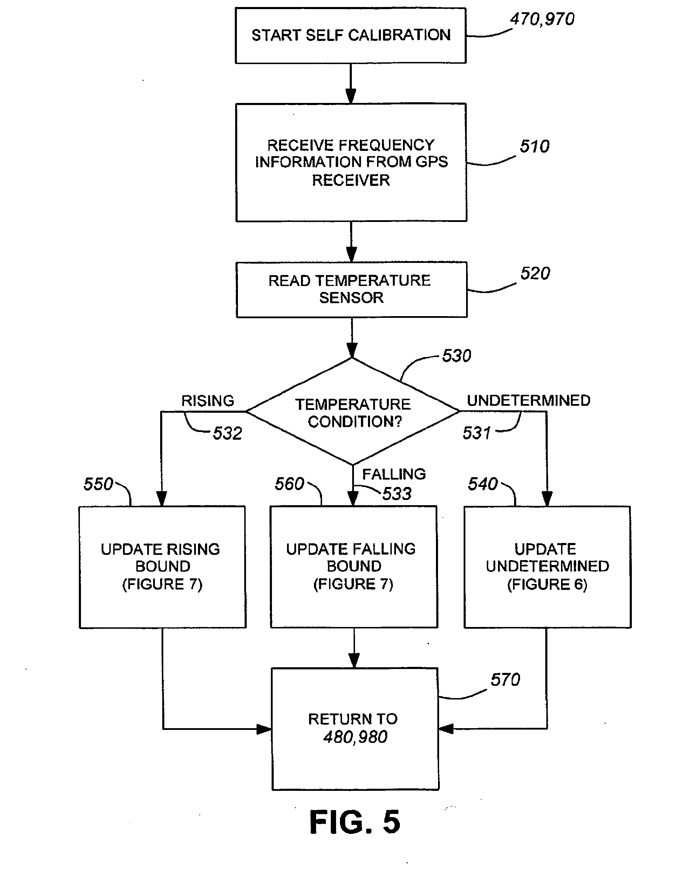

If the navigation satellite receiver **260** is in the operational mode **452,** it performs self-calibration **470** (also known as training, learning or self-learning; an "untrained" value as described herein refers to a value that has not yet been self-calibrated at a given point of temperature), to determine the frequency variation in the oscillator signal as a function of temperature, as disclosed below and shown in **Figure 5.** After the self-calibration is complete, resulting in a further update of the compensation tables, a determination is made as to whether the navigation satellite receiver **260** is instructed to be disabled **480.** If not **481,** it once again checks whether the navigation satellite receiver **260** is in operational mode. If so **482,** the processing terminates until the navigation satellite receiver **260** is re-enabled.

## Operational Mode

Turning now to **Figure 5,** during the operational mode of the navigation satellite receiver **260,** frequency data, which may include frequency offset, frequency and/or an uncertainty value associated with the returned frequency offset or frequency, is returned **510** by the navigation platform **266** to perform a self-calibration of the oscillator **263.** The frequency data may be provided by the navigation platform **266** to the microprocessor **210** on a periodic basis, determined by the report period of the frequency offset, which in an example embodiment, may be 12 sec. The frequency data may be in absolute units such as Hz., or may be relative, such as parts per billion (ppb). Preferably, the frequency data is frequency offset data, but those having ordinary skill in this art will appreciate that any kind of frequency information may be substituted therefor.

Generally, the selection of the appropriate reporting and sampling period depends upon the thermal time constant of the circuit board within a device enclosure on which the navigation platform **266** and the crystal oscillator **263** reside, and the frequency of reporting of the navigation platform **266.**

Concurrently, the microprocessor **210** reads **520** the digital temperature value of the temperature sensor **265.** Although the steps of receiving frequency offset information and reading the temperature sensor are shown as sequential steps in **Figure 5,** it will be appreciated by a person skilled in the art that these steps may conceivably occur effectively at the same time and/or in either order.

Preferably the temperature is scaled (with the application of rounding) so that the useful voltage range is re-mapped to the numerical range, which may be, in an example embodiment, [0, 127] suitable for direct comparison with the index temperature values in the compensation tables R and F. With the above-described thermistor / analog to digital converter example embodiment having a 10 bit A/D converter, this scaling may consist of a right shift of the 10 bit raw digital value by three bits.

Alternatively, when the temperature lies in a range of between [*a,b*] it may consist of subtracting an integer value A and then multiplying by a second value *B* in accordance with the relations:

$$A = a \qquad\qquad (1)$$

$$B = \frac{M}{b-a} \qquad\qquad (2)$$

where M is the table size, which may be, in an example embodiment, 127.

With the above-described TMP10x (e.g. TMP102) series digital sensor embodiment, this scaling may consist of either programming the device with a lower number of bits, or else a right shift of the 12 bit digital value by five bits. Those having ordinary skill in this art will readily appreciate that other scaling methods may also be suitable.

The microprocessor **210** uses this information to identify which, if any, of the two compensation tables to update, and how and with what value to update it, in accordance with pre-determined rules. Different update methods may apply depending on whether the temperature trend is known to be rising or falling or if the temperature trend cannot be determined.

In an example embodiment, a suitable set of rules may be as follows:

First, identify whether the measured temperature constitutes a rising trend, a falling trend or is undetermined **530.** For example, the measured temperature value $T_i$ may be compared against the two immediately previous measurements $T_{i-1}$ and $T_{i-2}$ in accordance with the following relations:

$$\text{If } \left(2 \times T_i\right) - \left(T_{i-1} + T_{i-2}\right) \geq T \text{ then there is a rising trend} \qquad (3)$$

$$\text{If } \left(T_{i-1} + T_{i-2}\right) - \left(2 \times T_i\right) \geq T \text{ then there is a falling trend, and} \qquad (4)$$

$$\text{If } \left|\left(2 \times T_i\right) - \left(T_{i-1} + T_{i-2}\right)\right| \leq T \text{ then there is no discernable trend,} \qquad (5)$$

where $T$ is a threshold value, and in an example embodiment, $T = 2$ .

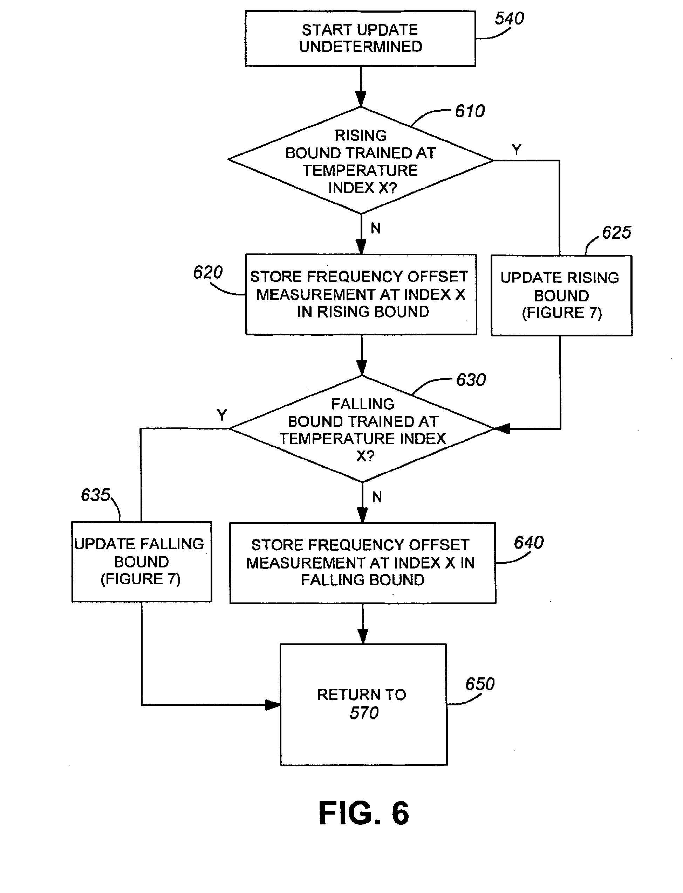

Second, if there is no discernable trend **531,** then certain condition-specific processing **540** is performed. As shown in **Figure 6,** this may constitute the frequency information corresponding to the measured temperature, in each of the compensation tables, being examined. If the frequency information in either or both of the compensation tables is untrained **610, 630** at the reported temperature, then the untrained frequency information in one or both tables **620, 640** is updated with the returned frequency offset value $x$, which in one example embodiment represents the absolute frequency error in Hz, as observed at the L1 GPS carrier frequency and in another example embodiment, may represent the relative frequency error in parts per billion (ppb). An untrained value would be represented by the presence of the unlikely value such as $- 2^{15} = -32768$.

If the frequency information in either or both of the compensation tables is not an untrained value, then the non-initialized information is updated **625, 635,** as discussed below, preferably by a slow update (also discussed below). In one example embodiment, the trained information is not updated at all, in which case steps **625** and **635** are bypassed.

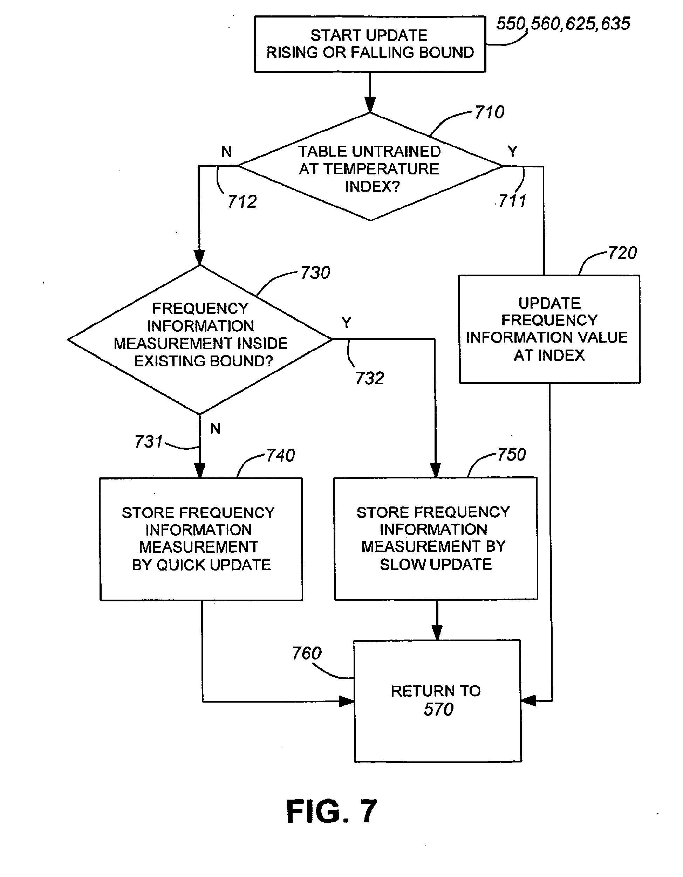

Third, if there is a rising trend **532,** then in $R$ , certain condition-specific processing is performed. As shown in **Figure 7,** the entry indexed by a temperature value closest to $T_i$ is accessed and a decision is made how to update the frequency information corresponding to the closest index value to the measured temperature and if so, by what. Similarly, if there is a falling trend **533,** the identical condition-specific processing is performed, but on $F.$ That is, the entry indexed by a temperature value closest to $T_i$ is accessed and a decision is made how to update the frequency information corresponding to the closest index value to the measured temperature.

In either case, the frequency information corresponding to the closest index value to the measured temperature in the appropriate table is examined **710.** If it is an untrained value **711,** represented by an unlikely value such as $- 2^{15} = -32768$, the returned frequency data $x$ is substituted therefor **720.**

If, however, the frequency information corresponding to the closest index value to the measured temperature in the appropriate table is not an untrained value **712,** the decision by what amount to update the frequency information may, in an example embodiment, depend on whether the returned frequency data lies outside or inside the then extant hysteresis loop **730** at the closest index value to the measured temperature.

As discussed above, when the frequency data lies outside the outer bounds denoted by the hysteresis loop **731,** a quick update may be performed **740,** so as to cause the hysteresis loop to rapidly converge to the new frequency data. On the other hand, when the frequency data lies within the outer bounds denoted by the hysteresis loop **732,** a slow update may be performed **750,** which will cause the hysteresis loop to gradually converge to the new frequency data, against the possibility that the new data is representative of a long-term trend, for example, as the navigation satellite receiver **260** ages.

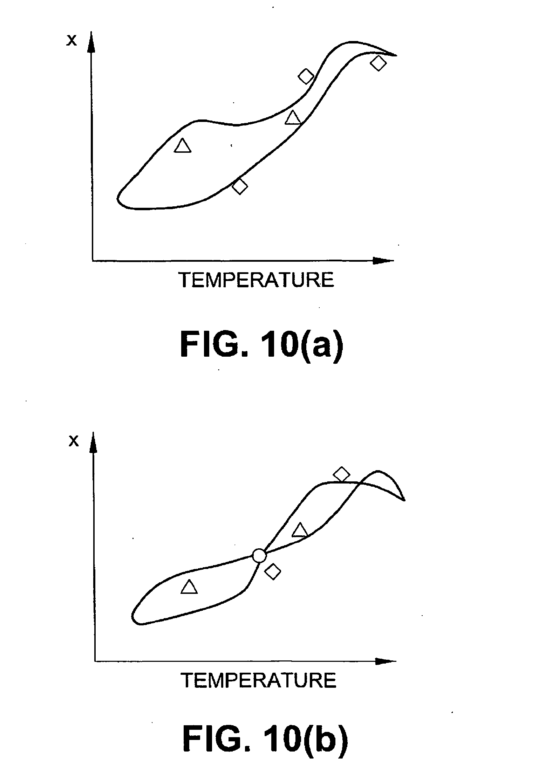

In a situation, such as is modeled in example fashion in **Figure 10(a),** in which a triangle denotes a data point that lies "inside" the hysteresis loop, a diamond denotes a data point that lies "outside" the hysteresis loop and a circle denotes a data point that lies "on" the hysteresis loop, that is, it remains undetermined whether it lies "inside" or "outside" the hysteresis loop, the determination of whether the frequency data lies inside or outside the outer bounds is relatively straightforward, because the loop does not intersect or cross over itself.

However, in a situation, such as is modeled in example fashion in **Figure 10(b),** in which the hysteresis loop crosses over itself at a number of points, the determination of whether the frequency data lies outside or inside the hysteresis loop is more complicated.

In the example embodiment being described, the returned frequency data $x$ is compared against the frequency information currently stored in each of the compensation tables $R$ and $F$ in accordance with the relations defined by **Equations (6)** and **(7)** below, corresponding respectively to a rising and falling temperature trend. The returned frequency data $x$ is considered to lie "outside" the hysteresis loop if the relation returns as logical false, and to lie "inside" the hysteresis loop if the relation returns as logical true:

$$sign(x - R[index]) = sign(F[index] - R[index])?  \qquad (6)$$

$$sign(x - F[index]) = sign(R[index] - F[index])?  \qquad (7)$$

If a quick update is thus called for, then the frequency information $x'$ currently stored in the corresponding compensation table $T$, that is, $R$, in the case of a rising trend and F, in the case of a falling trend, is replaced by filtered frequency information x" calculated in accordance with the following example relation:

$$x'' = x' + (x - x') >> 2  \qquad (8)$$

where $>> n$ represents an n-bit shift to the right, or to dividing by 2" .

On the other hand, if a slow update is called for, then the frequency information $x'$ currently stored in the corresponding compensation table $T$, that is, $R$, in the case of a rising trend and $F$, in the case of a falling trend, is replaced by a filtered frequency information x" calculated in accordance with the following example relation:

$$x'' = x' + (x - x') >> 5  \qquad (9)$$

In this manner, during the tracking mode (or indeed during those periods of manufacturing production testing when the navigation satellite receiver **260** is tracking simulated GPS satellite signals), the compensation tables $R$ and $F$ are being populated and periodically updated to reflect the current understanding of the hysteresis behaviour of the crystal **264** and oscillator **263**.

Those having ordinary skill in this art will appreciate that the number of right shifts in equations **(8)** and **(9)** determines the rate of convergence of the updates, with fewer bits corresponding to slower convergence speed. In an example embodiment, the number of shifts may be as many as 7 bits to the right.

**Acquisition Mode**

When, the navigation satellite receiver **260** is next put into acquisition mode, whether by a loss of lock to GPS signals, a system reset or a power on condition, the data stored in the compensation tables may be accessed to provide a better estimate of the frequency offset to be supplied to the navigation platform **266** in conjunction with the free-running fixed input clock signal **267**.

The manner in which this may be accomplished may be, in an example embodiment, as follows and as illustrated in **Figure 8:**

First, the microprocessor **210** reads **805** and scales, if appropriate, the digital temperature value $T_i$ of the temperature sensor **265**. Preferably it is scaled so that the useful voltage range is re-mapped to the numerical range [0, 127] suitable for direct comparison with the index temperature values in the compensation tables $R$ and $F$.

Second, the microprocessor **210** accesses the frequency information $x'$ stored in each of the compensation tables $R$ and $F$ (the "indexed entry") and indexed by a temperature value closest to $T_i$ (the "index").

If neither indexed entry has an unlikely value ("untrained value") **810** such as $-2^{15} = -32768$, that is, there is corresponding trained frequency information in each table corresponding to the index ("trained indexed value"), then a combined value of the two trained indexed values is calculated **815** and submitted in a message to the navigation platform **266**. Additionally, the navigation platform **266** may be supplied with an uncertainty value, indicative of an "uncertainty 1" condition, such as, for example, 0.15 ppm, that is, since both indexed values are trained values, that the frequency offset is considered to be highly accurate and is therefore assigned a narrow uncertainty value.

The values, designated $x_R$ and $x_F$ correspond to the two tables $F$ and $R$. In an uncertainty 1 scenario, they are both trained indexed values. In other scenarios, as discussed below, the values $x_R$ and $x_F$ may be interpolated from neighbouring entries depending on the availability of trained entries in the neighbouring range as will be discussed below. The values $x_R$ and $x_F$ may be combined in any of a number of different ways.

Typically, the values are combined to arrive at a combined *value X* using a weighting factor *w* lying in the range of [0,1] in accordance with the relation:

$$X = w * x_R + (1 - w) * x_F \qquad\qquad (10)$$

In the simplest case, *w* is 0.5, signifying that the combination constitutes taking the mean of the two values. Alternatively, a higher weight could be assigned to the value emanating from the table that corresponds to the prevailing temperature trend, in order to give it preferential weighting. For example, if the temperature is rising, *w* could be set to 0.75, and if the temperature is falling, w could be set to 0.25. In an extreme case, *w* could be set to 1 or 0, to select the value corresponding to the prevailing temperature trend only. Those having ordinary skill in this art will readily appreciate that other combining methods and values could be adopted.

If, however, one or both of the indexed entries is the unlikely value, then for such untrained indexed entries, a subset of table entries (the "neighboring entries") in the compensation table before and after the indexed value are accessed. In an example embodiment, up to five additional values on either side of the indexed value may be accessed, corresponding to a temperature range of approximately 7.5° C. If a value other than the unlikely value is found among the neighboring entries on each side of the untrained indexed entry, then such values on each side of the untrained indexed entry (the "trained neighboring values") and closest to the current temperature index are interpolated in order to arrive at an interpolated value at the temperature index.

If each of the compensation tables returns either a trained indexed value or an interpolated value **820** corresponding to the index, then such values are combined **825** as discussed above and submitted to the navigation platform **266** in a message. Additionally, the navigation platform **266** may be supplied with an uncertainty value, indicative of an "uncertainty 2" condition, such as, for example, 0.20 ppm, that is, that at least one of the combined values is an interpolated value.

If only one of the compensation tables returns either a trained indexed value or an interpolated value **830** corresponding to the current temperature index, and the other table could not find a trained indexed value or trained neighboring value from among the neighboring entries on both sides to be used for interpolation, then the returned trained indexed value or interpolated value from the one table is submitted **835** to the navigation platform **266** in a message. Additionally, the navigation platform **266** may be supplied with an uncertainty value, indicative of an "uncertainty 3" condition, such as, for example, 0.25 ppm, that is, that an exact value or interpolated value could be obtained from one of the compensation tables but not from both tables.

If neither of the compensation tables is able to return either a trained indexed value or an interpolated value corresponding to the index from its neighboring entries, but at least one trained value exists among the neighboring entries considered in both tables, that is at least one trained value exists among the neighboring entries on one side of the untrained indexed entry but not on the other side in both of the tables **840,** then the closest trained values for each table from among the neighboring entries are combined **845** and submitted to the navigation platform **266** in a message. If a trained value is found from among the neighboring entries in only one table, the closest trained value from among the neighboring entries is selected and submitted to the navigation platform **266** in a message. Additionally, in either case, the navigation platform **266** may be supplied with an uncertainty value, indicative of an "uncertainty 4" condition, such as, for example, 0.30 ppm in the former case and 0.35 ppm in the latter case, that is, that an exact value or interpolated value could not be obtained from either compensation table but that a trained value was found in at least one of the compensation tables from among the neighboring entries considered.

If no trained value exists among the neighboring entries considered in either table, but at least one trained value is found outside the neighboring range in one or both of the tables **850,** then the mean value of all such trained values in both tables is calculated **855** and submitted to the navigation platform **266** in a message. Additionally, the navigation platform **266** may be supplied with an uncertainty value, such as, for example, 0.45 ppm, that is indicative of an "uncertainty 5" condition, namely that a trained value could not be obtained from among the neighboring entries considered from either compensation table but that at least one trained value was found in at least one of the compensation tables, but outside the neighboring range.

Finally, if no trained values may be found in either of the tables **860,** then conventional methods of providing frequency aiding may be utilized **865.**

For example, where, as in the example embodiments described in the **Figures,** the navigation satellite receiver **260** has a corresponding wireless communications subsystem such as WAN communications module **221,** provided that the wireless network frequency is accurate (the Global System for Mobile Communications (GSM) / Universal Mobile Telecommunications System (UMTS) TS 05.10 / TS 25.104 standards specify a permissible error of ±0.05 ppm), the navigation platform **266** could be instructed to conduct counter-based frequency aiding with an input from the reference clock from the RF transceiver (not shown) in the WAN communications module **221,** which is frequency locked to the network wireless frequency, and an uncertainty value may be utilized in this aiding mode, that is indicative of an "uncertainty 6" condition, namely that the compensation tables are not used at all. Having said this, it bears noting that the wireless network coverage area may not always completely overlap areas where GPS signals are available.

In response to such instruction, a pair of built-in frequency counters (not shown) in the navigation platform **266** counts the number of cycles of each of the wireless engine reference clock and the GPS reference input clock signal **267** for a period of time, for example, 2 sec. and estimates the GPS reference clock offset based upon the ratio of the two clock cycle counts, or in other equivalent ways.

Alternatively, the free-running input clock signal **267** could simply be provided without any attempt at providing assistance. In this case, a wider search window will be employed by the navigation platform **266,** likely resulting in a longer Time To First Fix.

### Test / Production Mode

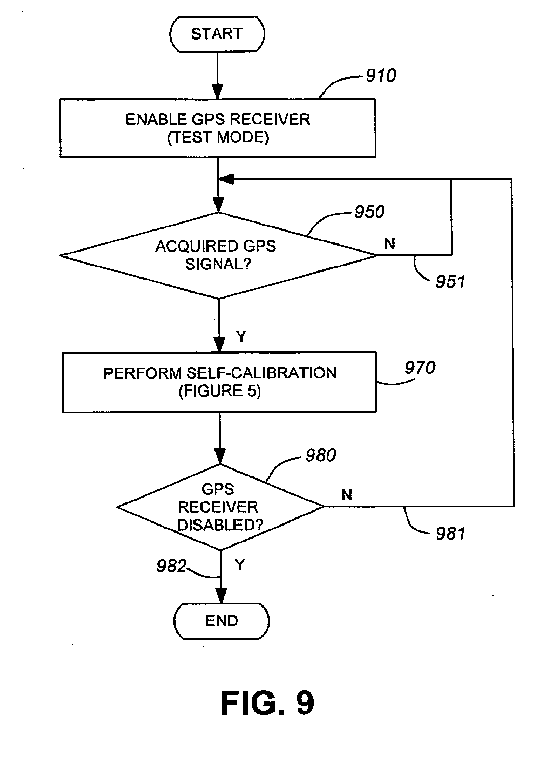

Turning now to **Figure 9,** those having ordinary skill in the art will appreciate that the navigation platform **266** may also provide accurate frequency offset measurements during some production test modes, in which the navigation platform **266** is tracking simulated satellite signals generated by a signal generator, frequency offset information may also be reported periodically, for example, every 3 sec.

When the navigation satellite receiver **260** is reset or powered on in such test mode, the navigation satellite receiver **260** is enabled **910.** At periodic intervals, a determination is made as to whether the navigation satellite receiver **260** has successfully acquired the GPS signal. If not **951,** it waits until the expiry of the next periodic interval before trying again. Otherwise, it performs self-calibration **970,** as described above and shown in **Figure 5.** After the self-calibration is complete, resulting in a further update of the compensation tables, a determination is made whether the navigation satellite receiver **260** is disabled **980.** If not **981,** it proceeds to step **950.** If so **982,** the processing terminates until the navigation receiver **260** is re-enabled in either acquisition or test mode.

The present disclosure can be implemented in digital electronic circuitry, or in computer hardware, firmware, software, or in combination thereof. Apparatus of the disclosure can be implemented in a computer program product tangibly embodied in a machine-readable storage device for execution by a programmable processor; and methods actions can be performed by a programmable processor executing a program of instructions to perform functions of the disclosure by operating on input data and generating output. The disclosure can be implemented advantageously on a programmable system including at least one input device, and at least one output device. Each computer program can be implemented in a high-level procedural or object-oriented programming language, or in assembly or machine language, if desired; and in any case, the language can be a compiled or interpreted language.

Suitable processors include, by way of example, both general and specific microprocessors. Generally, a processor will receive instructions and data from a read-only memory and/or a random access memory. Generally, a computer will include one or more mass storage devices for storing data file; such devices include magnetic disks and cards, such as internal hard disks, and removable disks and cards; magneto-optical disks; and optical disks. Storage devices suitable for tangibly embodying computer program instructions and data include all forms of volatile and non-volatile memory, including by way of example semiconductor memory devices, such as EPROM, EEPROM, and flash memory devices; magnetic disks such as internal hard disks and removable disks; magneto-optical disks; CD-ROM and DVD-ROM disks; and buffer circuits such as latches and/or flip flops. Any of the foregoing can be supplemented by, or incorporated in ASICs (disclosure-specific integrated circuits), FPGAs (field-programmable gate arrays) and/or DSPs (digital signal processors).

Examples of such types of computer are programmable processing systems contained in the microprocessor **210** and/or navigation satellite receiver **266,** suitable for implementing or performing the apparatus or methods of the disclosure. The system may comprise a processor, a random access memory, a hard drive controller, and/or an input/output controller, coupled by a processor bus.

While preferred embodiments are disclosed, this is not intended to be limiting. Rather, the general principles set forth herein are considered to be merely illustrative of the scope of the present disclosure and it is to be further understood that numerous changes covering alternatives, modifications and equivalents may be made without straying from the scope of the present disclosure, as defined by the appended claims.

### Claims

1. A navigation satellite receiver (260), comprising:

   a crystal oscillator (263,264) having an operable temperature range, the crystal oscillator (263,264) adapted to generate an input clock signal (267) having an actual frequency that drifts from a nominal frequency over the operable temperature range within outer bounds that shift over time;
a temperature sensor (265) thermally coupled with the crystal oscillator (263,264) for taking temperature measurements of the crystal oscillator (263,264);
a navigation platform (266) for receiving a plurality of signals having a known transmit frequency from a plurality of navigation satellites (390), the platform (266) being capable of operating:

in an acquisition mode in which the navigation platform (266) attempts to receive at least one of the plurality of signals from at least one navigation satellite (390) within a frequency search window that relates to a discrepancy between a nominal and actual frequency of the input clock signal (267);
in an operational mode, in which the navigation platform (266) is adapted to receive the plurality of signals from different navigation satellites (390) to obtain a current positional fix for the receiver (260); and
a processor (210) for producing during the operational mode, first and second sets of frequency information, selected from a group consisting of a frequency, frequency difference, frequency offset, frequency error, frequency difference uncertainty, frequency offset uncertainty and frequency error uncertainty, indicative of a discrepancy between the actual and the nominal frequency of the input clock signal (267) determined and applied by the navigation platform (266), as a function of oscillator temperature measurements taken by the temperature sensor (265), wherein the first and second sets represent the respective outer bounds of the frequency information;
whereby in acquisition mode, the navigation platform (266) is provided a frequency information estimate derived from data stored in the first and/or second sets of frequency information and accessed using a temperature measurement taken by the temperature sensor (265) to take into account a hysteresis effect of the input clock signal (267) due to temperature, and determines an estimated frequency of the input clock signal (267) used to specify the frequency search window for the current temperature measurement, based on the frequency information estimate.

2. A receiver (260) according to claim 1, wherein the navigation platform (266) is Assisted-GPS (A-GPS) compliant.

3. A receiver (260) according to claim 1 or claim 2, wherein the navigation platform (266) forwards the frequency information to the processor (210) periodically.

4. A receiver (260) according to any foregoing claim, wherein the operable temperature range is substantially between approximately -20°C and approximately 80°C.

5. A receiver (260) according to any foregoing claim, wherein the crystal oscillator (263,264) is a temperature compensated crystal oscillator (TCXO).

6. A receiver (260) according to any foregoing claim, wherein corresponding values in the first and second sets of frequency information correspond to a rising and falling temperature trend respectively; and/or
wherein corresponding values in the first and second sets of frequency information correspond to a maximum and minimum bound respectively.

7. A receiver (260) according to any foregoing claim, wherein the navigation platform (266) is further capable of operating in a test mode, whereby at least the minimum number of signals from the at least one satellites (390) may be generated and received by the receiver (260) and further frequency information may be determined.

8. A receiver (260) according to any foregoing claim, wherein the receiver (260) is a mobile device.

9. A method for providing frequency aiding information, for an input clock signal (267) generated by a crystal oscillator (263,264) having an operable temperature range and having an actual frequency that drifts from a nominal frequency across the operable temperature range within outer bounds that shift over time, to a navigation platform (266) in a navigation satellite receiver (260) comprising a temperature sensor (265) thermally coupled with the crystal oscillator (263,264) for taking temperature measurements thereof, the navigation platform (266) for receiving a plurality of signals having a known transmit frequency from a plurality of navigation satellites (390) and being capable of operating in an acquisition mode in which the navigation platform (266) attempts to receive at least one of the plurality of signals from at least one navigation satellite (390) within a frequency search window that relates to a discrepancy between nominal and actual frequencies of the input clock signal (267), and in an operational mode, in which the navigation platform (266) is adapted to receive the plurality of signals from different navigation satellites (390) to obtain a current positional fix for the receiver (260);

the method comprising the steps of:

a. in the operational mode:

    i. obtaining frequency data (510) from the navigation platform (266) indicative of a discrepancy between the actual frequency and the nominal frequency of the input clock signal (267) determined and applied by the navigation platform (266);

    ii. taking a contemporaneous temperature measurement (520) of the crystal oscillator (263,264); and

    iii. associating the frequency data (510) with the temperature measurement (520) and updating first and/or second sets of frequency information selected from a group consisting of a frequency, frequency difference, frequency offset, frequency error, frequency difference uncertainty, frequency offset uncertainty and frequency error uncertainty with the frequency data (520), the first and second sets representing the respective outer bounds of frequency information; and

b. in the acquisition mode:

    i. taking a current temperature measurement (805) of the crystal oscillator (263,264);

    ii. deriving a frequency information estimate from data stored in the first and/or second sets of frequency information and accessed using the current temperature measurement to take into account a hysteresis effect of the input clock signal (267) due to temperature; and

    iii. determining an estimated frequency of the input clock signal (267) used to specify the frequency search window for the current temperature measurement, based on the frequency information estimate.

10. The method according to claim 9, wherein the first and second sets of frequency information are initialized to a value indicative of an untrained status.

11. The method according to claim 10, wherein step a.iii comprises identifying whether the contemporaneous temperature measurement (520) is indicative of a temperature trend, and if not, updating any untrained value in either or both of the first and second sets of frequency information having a temperature index corresponding to the temperature measurement (520), with the frequency data (510); and/or

wherein step a.iii comprises identifying whether the contemporaneous temperature measurement (520) is indicative of a temperature trend, and if so, updating an entry, in a selected one of the first and second sets of frequency information corresponding to the identified trend, and having a temperature index corresponding to the contemporaneous temperature measurement (520), based upon the frequency data (510); and/or

wherein the step of updating a value comprises identifying whether the frequency data (510) lies between a stored value in each of the first and second sets of frequency information having a temperature index corresponding to the contemporaneous temperature measurement (520), and if so, substituting an updated value which slowly converges to the frequency data (510), and if not, substituting an updated value which rapidly converges to the frequency data (510); and/or

wherein the step substituting an updated value which slowly converges to the frequency data (510) and the act of substituting an updated value which rapidly converges to the frequency data (510) each comprise calculating the stored value and a difference between the frequency data (510) and the stored value, weighting the difference by a coefficient, adding the stored value thereto to produce a sum and substituting the sum for the stored value; and/or

wherein the coefficient in the step of substituting a value which slowly converges to the frequency data (510) is small in relation to the coefficient in the step of substituting a value which rapidly converges to the frequency data (510); and/or

wherein the coefficient is a divisor which is an exponent of 2.

12. The method according to any of claims 9 to 11, wherein step b.ii comprises providing an uncertainty factor indicative of a perceived uncertainty in the estimated frequency information; and/or

wherein step b.ii comprises providing a value, corresponding to at least one of the first and second sets of frequency information, that is not untrained, chosen from a group consisting of:

A. at least one value (815) in the at least one of the first and second sets of frequency information, and having a temperature index corresponding to the current temperature measurement (805);

B. at least one value, interpolated from among values in the at least one of the first and second sets of frequency information, and in proximity to a value of subparagraph A. that is untrained (825,835);

C. at least one value in the at least one of the first and second sets of frequency information, and in proximity to a value of subparagraph A. that is untrained (845); and

D. at least one value in the at least one of the first and second sets of frequency information (855); and/or

wherein the step of providing a value comprises multiplying the value corresponding to the first set of frequency information by a weighting constant in the range of [0,1], multiplying the value corresponding to the second set of frequency information by a difference from 1 of the weighting constant and adding the multiplied values.

13. A computer-readable medium (240,250) in a processor (210), in a navigation satellite receiver (260) comprising:

a crystal oscillator (263,264) having an operable temperature range, the crystal oscillator (263,264) adapted to generate an input clock signal (267) having an actual frequency that drifts from a nominal frequency over the operable temperature range within outer bounds that shift over time;

a temperature sensor (265) thermally coupled with the crystal oscillator (263,264) for taking temperature measurements of the crystal oscillator (263,264);

a navigation platform (266) for receiving a plurality of signals having a known transmit frequency from a plurality of navigation satellites (390), the platform (266) being capable of operating:

in an acquisition mode in which the navigation platform (266) attempts to receive at least one of the plurality of signals from at least one navigation satellite (390) within a frequency search window that relates to a discrepancy between a nominal and actual frequency of the input clock signal (267);

in an operational mode, in which the navigation platform (266) is adapted to receive the plurality of signals from different navigation satellites (390) to obtain a current positional fix for the receiver (260);

the medium (240,250) having stored thereon, computer-readable and computer-executable instructions which, when executed by the processor (210), cause the processor (210) to perform steps comprising :

a. in the operational mode:

i. obtaining frequency data (510) from the navigation platform (266) indicative of a discrepancy between the actual frequency and the nominal frequency of the input clock signal (267) and determined and applied internally by the navigation platform (266);

ii. taking a contemporaneous temperature measurement (520) of the crystal oscillator (263,264); and

iii. associating the frequency data (510) with the temperature measurement (520) and updating first and/or second sets of frequency information selected from a group consisting of a frequency, frequency difference, frequency offset, frequency error, frequency difference uncertainty, frequency offset uncertainty and frequency error uncertainty, with the frequency data (510), the first and/or second sets representing the respective outer bounds of frequency information; and

b. in the acquisition mode:

i. taking a current temperature measurement (805) of the crystal oscillator (263,264);

ii. deriving a frequency information estimate from data stored in the first and/or second sets of frequency information and accessed using the current temperature measurement to take into account a hysteresis effect of the input clock signal (267) due to temperature; and

iii. determining an estimated frequency of the input clock signal (267) used to specify the frequency search window for the current temperature measurement, based on the frequency information estimate.

**Patentansprüche**

1. Navigationssatelliten-Empfänger (260), der aufweist:

einen Kristalloszillator (263, 264), der einen betriebsfähigen Temperaturbereich hat, wobei der Kristalloszillator (263, 264) ausgebildet ist, ein Eingangstaktsignal (267) zu erzeugen, das eine tatsächliche Frequenz hat, die von einer Nennfrequenz über den betriebsfähigen Temperaturbereich innerhalb äußerer Grenzen abweicht, die sich mit der Zeit verschieben;

einen Temperatursensor (265), der mit dem Kristalloszillator (263, 264) thermisch verbunden ist zum Durchführen von Temperaturmessungen des Kristalloszillators (263, 264);

eine Navigationsplattform (266) zum Empfangen einer Vielzahl von Signalen, die eine bekannte Sendefrequenz haben, von einer Vielzahl von Navigationssatelliten (390), wobei die Plattform (266) betriebsfähig ist:

in einem Akquisitionsmodus, in dem die Navigationsplattform (266) versucht, zumindest eines der Vielzahl von Signalen von zumindest einem Navigationssatelliten (390) in einem Frequenzsuchfenster zu empfangen, das eine Diskrepanz zwischen einer Nenn- und einer tatsächlichen Frequenz des Eingangstaktsignals (267) betrifft;

in einem Betriebsmodus, in dem die Navigationsplattform (266) ausgebildet ist, die Vielzahl von Signalen von unterschiedlichen Navigationssatelliten (390) zu empfangen, um eine aktuelle

Positionsbestimmung für den Empfänger (260) zu erlangen; und einen Prozessor (210) zum Erzeugen, während des Betriebsmodus, erster und zweiter Sätze von Frequenzinformation, ausgewählt aus einer Gruppe, die aus einer Frequenz, Frequenzdifferenz, Frequenzverschiebung, Frequenzfehler, Frequenzdifferenzunsicherheit,

Frequenzverschiebungsunsicherheit und Frequenzfehlerunsicherheit besteht, die eine Diskrepanz zwischen der tatsächlichen und der Nennfrequenz des Eingangstaktsignals (267) anzeigen, bestimmt und angewendet durch die Navigationsplattform (266), als eine Funktion von Oszillatortemperaturmessungen, die von dem Temperatursensor (265) vorgenommen werden, wobei die ersten und zweiten Sätze die jeweiligen äußeren Grenzen der Frequenzinformation repräsentieren;

wobei in dem Akquisitionsmodus für die Navigationsplattform (266) eine Frequenzinformationsschätzung vorgesehen ist, die aus Daten abgeleitet wird, die in den ersten und/oder zweiten Sätzen von Frequenzinformation gespeichert sind und auf die zugegriffen wird unter Verwendung einer Temperaturmessung, die von dem Temperatursensor (265) durchgeführt wird, um einen Hysterese-Effekt des Eingangstaktsignals (267) aufgrund von Temperatur zu berücksichtigen, und eine geschätzte Frequenz des Eingangstaktsignals (267) bestimmt wird, die verwendet wird, um das Frequenzsuchfenster für die aktuelle Temperaturmessung basierend auf der Frequenzinformationsschätzung zu spezifizieren.

2. Empfänger (260) gemäß Anspruch 1, wobei die Navigationsplattform (266) konform mit unterstütztem GPS (A-GPS - Assisted GPS) ist.

3. Empfänger (260) gemäß Anspruch 1 oder Anspruch 2, wobei die Navigationsplattform (266) die Frequenzinformation regelmäßig an den Prozessor (210) weiterleitet.

4. Empfänger (260) gemäß einem vorhergehenden Anspruch, wobei der betriebsfähige Temperaturbereich im Wesentlichen zwischen ungefähr-20 °C und ungefähr 80°C ist.

5. Empfänger (260) gemäß einem vorhergehenden Anspruch, wobei der Kristalloszillator (263, 264) ein temperaturkompensierter Kristalloszillator (TCXO) ist.

6. Empfänger (260) gemäß einem vorhergehenden Anspruch, wobei entsprechende Werte in den ersten und zweiten Sätzen von Frequenzinformation jeweils einem ansteigenden und fallenden Temperaturtrend entsprechen; und/oder wobei entsprechende Werte in den ersten und zweiten Sätzen von Frequenzinformation jeweils einer Maximum- und Minimum-Grenze entsprechen.

7. Empfänger (260) gemäß einem vorhergehenden Anspruch, wobei die Navigationsplattform (266) weiter in einem Testmodus arbeiten kann, wodurch zumindest die Minimum-Anzahl von Signalen von dem zumindest einen Satelliten (390) erzeugt werden kann und von dem Empfänger (260) empfangen werden kann und eine weitere Frequenzinformation bestimmt werden kann.

8. Empfänger (260) gemäß einem vorhergehenden Anspruch, wobei der Empfänger (260) eine mobile Vorrichtung ist.

9. Verfahren zum Vorsehen einer Frequenzunterstützungsinformation für ein Eingangstaktsignal (267), das durch einen Kristalloszillator (263, 264) erzeugt wird, der einen betriebsfähigen Temperaturbereich hat und eine tatsächliche Frequenz hat, die von einer Nennfrequenz über den betriebsfähigen Temperaturbereich innerhalb äußerer Grenzen abweicht, die sich mit der Zeit verschieben, zu einer Navigationsplattform (266) in einem Navigationssatellitenempfänger (260), der einen Temperatursensor (265) aufweist, der mit dem Kristalloszillator (263, 264) thermisch verbunden ist zum Durchführen von Temperaturmessungen von diesem, wobei die Navigationsplattform (266) vorgesehen ist zum Empfangen einer Vielzahl von Signalen, die eine bekannte Sendefrequenz haben, von einer Vielzahl von Navigationssatelliten (390), und betriebsfähig ist zum Arbeiten in einem Akquisitionsmodus, in dem die Navigationsplattform (266) versucht, zumindest eines der Vielzahl von Signalen von zumindest einem Navigationssatelliten (390) in einem Frequenzsuchfenster zu empfangen, das eine Diskrepanz zwischen Nenn- und tatsächlichen Frequenzen des Eingangstaktsignals (267) betrifft, und in einem Betriebsmodus, in dem die Navigationsplattform (266) ausgebildet ist, die Vielzahl von Signalen von unterschiedlichen Navigationssatelliten (390) zu empfangen, um eine aktuelle Positionsbestimmung für den Empfänger (260) zu erlangen; wobei das Verfahren die Schritte aufweist:

a. in dem Betriebsmodus:

i. Erlangen von Frequenzdaten (510) von der Navigationsplattform (266), die eine Diskrepanz zwischen der tatsächlichen Frequenz und der Nennfrequenz des Eingangstaktsignals (267) anzeigen, bestimmt und angewendet von der Navigationsplattform (266);
ii. Durchführen einer gleichzeitigen Temperaturmessung (520) des Kristalloszillators (263, 264); und
iii. Zuordnen der Frequenzdaten (510) zu der Temperaturmessung (520) und Aktualisieren erster und/oder zweiter Sätze von Frequenzinformation, ausgewählt aus einer Gruppe, die aus einer Frequenz, Frequenzdifferenz, Frequenzverschiebung, Frequenzfehler, Frequenzdifferenzunsicherheit, Frequenzverschiebungsunsicherheit und Frequenzfehlerunsicherheit besteht, mit den Frequenzdaten (520), wobei die ersten und zweiten Sätze die jeweiligen äußeren Grenzen von Frequenzinformation repräsentieren; und

b. in dem Akquisitionsmodus:

i. Durchführen einer aktuellen Temperaturmessung (805) des Kristalloszillators (263, 264);
ii. Ableiten einer Frequenzinformationsschätzung aus Daten, die in den ersten und/oder zweiten Sätzen von Frequenzinformation gespeichert sind und auf die zugegriffen wird unter Verwendung der aktuellen Temperaturmessung, um einen Hysterese-Effekt des Eingangstaktsignals (267) aufgrund von Temperatur zu berücksichtigen; und
iii. Bestimmen einer geschätzten Frequenz des Eingangstaktsignals (267), die verwendet wird, um das Frequenzsuchfenster für die aktuelle Temperaturmessung basierend auf der Frequenzinformationsschätzung zu spezifizieren.

10. Verfahren gemäß Anspruch 9, wobei die ersten und zweiten Sätze von Frequenzinformation auf einen Wert initialisiert werden, der einen untrainierten Status anzeigt.

11. Verfahren gemäß Anspruch 10, wobei Schritt a.iii aufweist ein Identifizieren, ob die gleichzeitige Temperaturmessung (520) einen Temperaturtrend anzeigt, und wenn nicht, ein Aktualisieren eines untrainierten Werts in einem oder beiden der ersten und zweiten Sätze von Frequenzinformation mit einem Temperaturindex, der einer Temperaturmessung (520) entspricht, mit den Frequenzdaten (510); und/oder
wobei Schritt a.iii aufweist ein Identifizieren, ob die gleichzeitige Temperaturmessung (520) einen Temperaturtrend anzeigt, und wenn ja, ein Aktualisieren eines Eintrags, in einem ausgewählten der ersten und zweiten Sätze von Frequenzinformation, der dem identifizierten Trend entspricht und einen Temperaturindex hat, der der gleichzeitigen Temperaturmessung (520) entspricht, basierend auf den Frequenzdaten (510); und/oder
wobei der Schritt des Aktualisierens eines Werts aufweist ein Identifizieren, ob die Frequenzdaten (510) zwischen einem gespeicherten Wert in jedem der ersten und zweiten Sätze von Frequenzinformation liegen, der einen Temperaturindex hat, der der gleichzeitigen Temperaturmessung (520) entspricht, und wenn ja, Ersetzen eines aktualisierten Werts, der sich langsam den Frequenzdaten (510) annähert, und wenn nicht, Ersetzen eines aktualisierten Werts, der sich schnell den Frequenzdaten (510) annähert; und/oder
wobei der Schritt des Ersetzens eines aktualisierten Werts, der sich langsam den Frequenzdaten (510) annähert, und der Vorgang des Ersetzens eines aktualisierten Werts, der sich schnell den Frequenzdaten (510) annähert, jeweils aufweist ein Berechnen des gespeicherten Werts und einer Differenz zwischen den Frequenzdaten (520) und dem gespeicherten Wert, ein Gewichten der Differenz durch einen Koeffizienten, ein Hinzufügen des gespeicherten Werts, um eine Summe zu erzeugen, und Ersetzen der Summe für den gespeicherten Wert; und/oder wobei der Koeffizient in dem Schritt des Ersetzens eines Werts, der sich langsam den Frequenzdaten (510) annähert, klein ist in Relation zu dem Koeffizient in dem Schritt des Ersetzens eines Werts, der sich schnell den Frequenzdaten (510) annähert; und/oder
wobei der Koeffizient ein Divisor ist, der ein Exponent von 2 ist.

12. Verfahren gemäß einem der Ansprüche 9 bis 11, wobei der Schritt b.ii ein Vorsehen eines Unsicherheitsfaktors aufweist, der eine wahrgenommene Unsicherheit in der geschätzten Frequenzinformation anzeigt; und/oder wobei der Schritt b.ii aufweist ein Vorsehen eines Werts, der zumindest einem der ersten und zweiten Sätze von Frequenzinformation entspricht, der nicht untrainiert ist, gewählt aus einer Gruppe, die besteht aus:

A. zumindest einem Wert (815) in dem zumindest einen der ersten und zweiten Sätze von Frequenzinformation, und der einen Temperaturindex hat, der der aktuellen Temperaturmessung (805) entspricht;

B. zumindest einem Wert, der aus Werten in dem zumindest einen der ersten und zweiten Sätze von Frequenzinformation interpoliert wird, und in der Nähe zu einem Wert des Unterpunkts A., der untrainiert ist (825, 835);

C. zumindest einem Wert in dem zumindest einen der ersten und zweiten Sätze von Frequenzinformation, und in der Nähe zu einem Wert des Unterpunkts A., der untrainiert ist (845); und

D. zumindest einem Wert in dem zumindest einen der ersten und zweiten Sätze von Frequenzinformation (855); und/oder wobei der Schritt des Vorsehens eines Werts aufweist ein Multiplizieren des Werts, der dem ersten Satz von Frequenzinformation entspricht, mit einer Gewichtungskonstante in dem Bereich von [0, 1], Multiplizieren des Werts, der dem zweiten Satz von Frequenzinformation entspricht, mit einer Differenz von 1 zu der Gewichtungskonstante und Hinzufügen der multiplizierten Werte.

13. Computerlesbares Medium (240, 250) in einem Prozessor (210) in einem Navigationssatellitenempfänger (260), der aufweist:

einen Kristalloszillator (263, 264), der einen betriebsfähigen Temperaturbereich hat, wobei der Kristalloszillator (263, 264) ausgebildet ist, ein Eingangstaktsignal (267) zu erzeugen, das eine tatsächliche Frequenz hat, die von einer Nennfrequenz über den betriebsfähigen Temperaturbereich innerhalb äußerer Grenzen abweicht, die sich mit der Zeit verschieben;

einen Temperatursensor (265), der mit dem Kristalloszillator (263, 264) thermisch verbunden ist zum Durchführen von Temperaturmessungen des Kristalloszillators (263, 264);

eine Navigationsplattform (266) zum Empfangen einer Vielzahl von Signalen, die eine bekannte Sendefrequenz haben, von einer Vielzahl von Navigationssatelliten (390), wobei die Plattform (266) betriebsfähig ist:

in einem Akquisitionsmodus, in dem die Navigationsplattform (266) versucht, zumindest eines der Vielzahl von Signalen von zumindest einem Navigationssatelliten (390) in einem Frequenzsuchfenster zu empfangen, das eine Diskrepanz zwischen einer Nenn- und einer tatsächlichen Frequenz des Eingangstaktsignals (267) betrifft;

in einem Betriebsmodus, in dem die Navigationsplattform (266) ausgebildet ist, die Vielzahl von Signalen von unterschiedlichen Navigationssatelliten (390) zu empfangen, um eine aktuelle Positionsbestimmung für den Empfänger (260) zu erlangen;

wobei das Medium (240, 250) computerlesbare und computerausführbare Anweisungen darauf gespeichert hat, die bei Ausführung durch den Prozessor (210) den Prozessor (210) veranlassen, Schritte durchzuführen, die aufweisen:

a. in dem Betriebsmodus:

i. Erlangen von Frequenzdaten (510) von der Navigationsplattform (266), die eine Diskrepanz zwischen der tatsächlichen Frequenz und der Nennfrequenz des Eingangstaktsignals (267) anzeigen und bestimmt und intern angewendet von der Navigationsplattform (266);

ii. Durchführen einer gleichzeitigen Temperaturmessung (520) des Kristalloszillators (263, 264); und

iii. Zuordnen der Frequenzdaten (510) zu der Temperaturmessung (520) und Aktualisieren erster und/oder zweiter Sätze von Frequenzinformation, ausgewählt aus einer Gruppe, die aus einer Frequenz, Frequenzdifferenz, Frequenzverschiebung, Frequenzfehler, Frequenzdifferenzunsicherheit, Frequenzverschiebungsunsicherheit und Frequenzfehlerunsicherheit besteht, mit den Frequenzdaten (520), wobei die ersten und/oder zweiten Sätze die jeweiligen äußeren Grenzen von Frequenzinformation repräsentieren; und

b. in dem Akquisitionsmodus:

i. Durchführen einer aktuellen Temperaturmessung (805) des Kristalloszillators (263, 264);

ii. Ableiten einer Frequenzinformationsschätzung aus Daten, die in den ersten und/oder zweiten Sätzen von Frequenzinformation gespeichert sind und auf die zugegriffen wird unter Verwendung der aktuellen Temperaturmessung, um einen Hysterese-Effekt des Eingangstaktsignals (267) aufgrund von Temperatur zu berücksichtigen; und

iii. Bestimmen einer geschätzten Frequenz des Eingangstaktsignals (267), die verwendet wird, um das Frequenzsuchfenster für die aktuelle Temperaturmessung basierend auf der Frequenzinformationsschätzung zu spezifizieren.

## Revendications

1. Récepteur de satellite de navigation (260), comprenant :

un oscillateur à cristal (263, 264) ayant une plage de température de fonctionnement, l'oscillateur à cristal (263, 264) étant adapté de façon à générer un signal d'horloge d'entrée (267) ayant une fréquence réelle qui dérive à partir d'une fréquence nominale sur la plage de température de fonctionnement à l'intérieur de limites extérieures qui dérivent au cours du temps ;

un capteur de température (265) thermiquement couplé à l'oscillateur à cristal (263, 264) pour prendre des mesures de température de l'oscillateur à cristal (263, 264) ;

une plateforme de navigation (266) pour recevoir une pluralité de signaux ayant une fréquence d'émission connue à partir d'une pluralité de satellites de navigation (390), la plateforme (266) étant susceptible de fonctionner :

dans un mode d'acquisition dans lequel la plateforme de navigation (266) tente de recevoir au moins l'un de la pluralité de signaux à partir d'au moins un satellite de navigation (390) à l'intérieur d'une fenêtre de recherche de fréquence qui concerne une discordance entre une fréquence nominale et une fréquence réelle du signal d'horloge d'entrée (267) ;

dans un mode de fonctionnement, dans lequel la plateforme de navigation (266) est adaptée de façon à recevoir la pluralité de signaux à partir de différents satellites de navigation (390) de façon à obtenir un repère de position actuelle pour le récepteur (260) ; et

un processeur (210) pour produire, durant le mode de fonctionnement, des premier et deuxième jeux d'information de fréquence, sélectionnées à partir d'un groupe comprenant une fréquence, une différence de fréquence, un décalage de fréquence, une erreur de fréquence, une incertitude de différence de fréquence, une incertitude de décalage de fréquence et une incertitude d'erreur de fréquence, indicatifs d'une discordance entre la fréquence réelle et la fréquence nominale du signal d'horloge d'entrée (267) déterminée et appliquée par la plateforme de navigation (266), en fonction de mesures de température d'oscillateur prises par le capteur de température (265), les premier et deuxième jeux représentant les limites extérieures respectives de l'information de fréquence ;

grâce à quoi, dans le mode d'acquisition, la plateforme de navigation (266) se voit délivrer une estimation d'information de fréquence dérivée de données mémorisées dans les premier et/ou deuxième jeux d'information de fréquence et auxquelles il est accédé à l'aide d'une mesure de température prise par le capteur de température (265) de façon à tenir compte d'un effet d'hystérésis du signal d'horloge d'entrée (267) dû à la température, et détermine une fréquence estimée du signal d'horloge d'entrée (267), utilisée pour spécifier la fenêtre de recherche de fréquence pour la mesure de température actuelle, en fonction de l'estimation d'information de fréquence.

2. Récepteur (260) selon la revendication 1, dans lequel la plateforme de navigation (266) est conforme au GPS assisté (A-GPS).

3. Récepteur (260) selon la revendication 1 ou la revendication 2, dans lequel la plateforme de navigation (266) transmet périodiquement l'information de fréquence au processeur (210).

4. Récepteur (260) selon l'une quelconque des revendications précédentes, dans lequel la plage de température de fonctionnement est sensiblement comprise entre approximativement -20° C et approximativement 80° C.

5. Récepteur (260) selon l'une quelconque des revendications précédentes, dans lequel l'oscillateur à cristal (263, 264) est un oscillateur à cristal compensé en température (TCXO).

6. Récepteur (260) selon l'une quelconque des revendications précédentes, dans lequel des valeurs correspondantes dans les premier et deuxième jeux d'information de fréquence correspondent à des tendances de température montante et descendante, respectivement ; et/ou
dans lequel des valeurs correspondantes dans les premier et deuxième jeux d'information de fréquence correspondent à des limites maximale et minimale, respectivement.

7.  Récepteur (260) selon l'une quelconque des revendications précédentes, dans lequel la plateforme de navigation (266) est de plus susceptible de fonctionner dans un mode de test, grâce à quoi au moins le nombre minimal de signaux venant des satellites au nombre d'au moins un (390) peut être généré et reçu par le récepteur (260), et une autre information de fréquence peut être déterminée.

8.  Récepteur (260) selon l'une quelconque des revendications précédentes, dans lequel le récepteur (260) est un dispositif mobile.

9.  Procédé pour délivrer une information d'assistance à la fréquence, pour un signal d'horloge d'entrée (267) généré par un oscillateur à cristal (263, 264) ayant une certaine plage de température de fonctionnement et ayant une fréquence réelle qui dérive d'une fréquence nominale dans la plage de température de fonctionnement à l'intérieur de limites extérieures qui dérivent au cours du temps, à une plateforme de navigation (266) dans un récepteur de satellite de navigation (260) comprenant un capteur de température (265) thermiquement couplé à l'oscillateur à cristal (263, 264) pour prendre des mesures de température de celui-ci, la plateforme de navigation (266) servant à recevoir une pluralité de signaux ayant une fréquence d'émission connue à partir d'une pluralité de satellites de navigation (390) et étant susceptible de fonctionner dans un mode d'acquisition dans lequel la plateforme de navigation (266) tente de recevoir au moins l'un de la pluralité de signaux venant d'au moins un satellite de navigation (390) à l'intérieur d'une fenêtre de recherche de fréquence qui concerne une discordance entre des fréquences nominale et réelle du signal d'horloge d'entrée (267), et dans un mode de fonctionnement, dans lequel la plateforme de navigation (266) est adaptée de façon à recevoir la pluralité de signaux venant de différents satellites de navigation (390) de façon à obtenir un repère de position actuelle pour le récepteur (260) ;
le procédé comprenant les étapes consistant à :

a. dans le mode de fonctionnement :

i. obtenir des données de fréquence (510) à partir de la plateforme de navigation (266), indicatives d'une discordance entre la fréquence réelle et la fréquence nominale du signal d'horloge d'entrée (267), déterminées et appliquées par la plateforme de navigation (266) ;
ii. prendre une mesure de température contemporaine (520) de l'oscillateur à cristal (263, 264) ; et
iii. associer les données de fréquence (510) à la mesure de température (520) et remettre à jour des premier et/ou deuxième jeux d'information de fréquence sélectionnés parmi un groupe comprenant une fréquence, une différence de fréquence, un décalage de fréquence, une erreur de fréquence, une incertitude de différence de fréquence, une incertitude de décalage de fréquence et une incertitude d'erreur de fréquence, avec les données de fréquence (520), les premier et deuxième jeux représentant les limites extérieures d'information de fréquence respectives ; et

b. dans le mode d'acquisition :

i. prendre une mesure de température actuelle (805) de l'oscillateur à cristal (263, 264) ;
ii. dériver une estimation d'information de fréquence à partir de données mémorisées dans les premier et/ou deuxième jeux d'information de fréquence et auxquelles il est accédé à l'aide de la mesure de température actuelle afin de tenir compte d'un effet d'hystérésis du signal d'horloge d'entrée (267) du fait de la température ; et
iii. déterminer une fréquence estimée du signal d'horloge d'entrée (267) utilisé pour spécifier la fenêtre de recherche de fréquence pour la mesure de température actuelle, en fonction de l'estimation d'information de fréquence.

10. Procédé selon la revendication 9, dans lequel les premier et deuxième jeux d'information de fréquence sont initialisés à une valeur indicative d'un état sans apprentissage.

11. Procédé selon la revendication 10, dans lequel l'étape a.iii comprend l'identification du fait que la mesure de température contemporaine (520) est ou non indicative d'une tendance de température, et, si ce n'est pas le cas, la remise à jour de toute valeur sans apprentissage dans l'un ou l'autre, ou dans les deux, des premier et deuxième jeux d'information de température ayant un indice de température correspondant à la mesure de température (520), avec les données de fréquence (510) ; et/ou

dans lequel l'étape a.iii comprend l'identification du fait que la mesure de température contemporaine (520) est ou non indicative d'une tendance de température, et, si c'est le cas, la remise à jour d'une entrée, dans un jeu sélectionné des premier et deuxième jeux d'information de fréquence correspondant à la tendance identifiée, et ayant un indice de température correspondant à la mesure de température contemporaine (520), en fonction des données de fréquence (510) ; et/ou

dans lequel l'étape de remise à jour d'une valeur comprend l'identification du fait que les données de fréquence (510) se trouvent ou non entre une valeur mémorisée dans chacun des premier et deuxième jeux d'information de fréquence ayant un indice de température correspondant à la mesure de température contemporaine (520), et, si c'est le cas, la substitution d'une valeur remise à jour qui converge lentement vers les données de fréquence (510), et, si ce n'est pas le cas, la substitution d'une valeur remise à jour qui converge rapidement vers les données de fréquence (510) ; et/ou

dans lequel l'étape de substitution d'une valeur remise à jour qui converge lentement vers les données de fréquence (510) et l'acte de substitution d'une valeur remise à jour qui converge rapidement vers les données de fréquence (510) comprennent chacun le calcul de la valeur mémorisée et d'une différence entre les données de fréquence (510) et la valeur mémorisée, la pondération de la différence par un coefficient, l'addition de la valeur mémorisée à celui-ci afin de produire une somme et la substitution de la somme à la valeur mémorisée ; et/ou

dans lequel le coefficient dans l'étape de substitution d'une valeur qui converge lentement vers les données de fréquence (510) est petit par rapport au coefficient dans l'étape de substitution d'une valeur qui converge rapidement vers les données de fréquence (510) ; et/ou

dans lequel le coefficient est un diviseur qui est un exposant de 2.

12. Procédé selon l'une quelconque des revendications 9 à 11, dans lequel l'étape b.ii comprend la délivrance d'un facteur d'incertitude indicatif d'une incertitude perçue dans l'information de fréquence estimée ; et/ou

dans lequel l'étape b.ii comprend la délivrance d'une valeur, correspondant à au moins l'un des premier et deuxième jeux d'information de fréquence, qui n'a pas subi d'apprentissage, choisie parmi un groupe comprenant :

A. au moins une valeur (815) dans le jeu au nombre d'au moins un des premier et deuxième jeux d'information de fréquence, et ayant un indice de température correspondant à la mesure de température actuelle (805) ;

B. au moins une valeur, interpolée parmi des valeurs dans le jeu au nombre d'au moins un des premier et deuxième jeux d'information de fréquence, et à proximité d'une valeur du sous-paragraphe A. qui n'a pas subi d'apprentissage (825, 835) ;

C. au moins une valeur dans le jeu au nombre d'au moins un des premier et deuxième jeux d'information de fréquence, et à proximité d'une valeur du sous-paragraphe A. qui n'a pas subi d'apprentissage (845) ; et

D. au moins une valeur dans le jeu au nombre d'au moins un des premier et deuxième jeux d'information de fréquence (855) ; et/ou

dans lequel l'étape de délivrance d'une valeur comprend la multiplication de la valeur correspondant au premier jeu d'information de fréquence par une constante de pondération dans la plage de [0, 1], la multiplication de la valeur correspondant au deuxième jeu d'information de fréquence par une différence de 1 de la constante de pondération et l'addition des valeurs multipliées.

13. Support lisible par un ordinateur (240, 250) dans un processeur (210), dans un récepteur de satellite de navigation (260) comprenant :

un oscillateur à cristal (263, 264) ayant une plage de température de fonctionnement, l'oscillateur à cristal (263, 264) étant adapté de façon à générer un signal d'horloge d'entrée (267) ayant une fréquence réelle qui dérive à partir d'une fréquence nominale sur la plage de température de fonctionnement à l'intérieur de limites extérieures qui dérivent au cours du temps ;

un capteur de température (265) thermiquement couplé à l'oscillateur à cristal (263, 264) pour prendre des mesures de température de l'oscillateur à cristal (263, 264) ;

une plateforme de navigation (266) pour recevoir une pluralité de signaux ayant une fréquence d'émission connue à partir d'une pluralité de satellites de navigation (390), la plateforme (266) étant susceptible de fonctionner :

dans un mode d'acquisition dans lequel la plateforme de navigation (266) tente de recevoir au moins l'un de la pluralité de signaux à partir d'au moins un satellite de navigation (390) à l'intérieur d'une fenêtre de recherche de fréquence qui concerne une discordance entre une fréquence nominale et une fréquence réelle du signal d'horloge d'entrée (267) ;

dans un mode de fonctionnement, dans lequel la plateforme de navigation (266) est adaptée de façon à recevoir la pluralité de signaux à partir de différents satellites de navigation (390) de façon à obtenir un repère de position actuelle pour le récepteur (260) ;

le support (240, 250) comportant, mémorisées sur celui-ci, des instructions lisibles par un ordinateur et exécutables par un ordinateur, qui, lorsqu'elles sont exécutées par le processeur (210), font effectuer au processeur (210) des étapes comprenant :

    a. dans le mode de fonctionnement :

        i. l'obtention de données de fréquence (510) à partir de la plateforme de navigation (266), indicatives d'une discordance entre la fréquence réelle et la fréquence nominale du signal d'horloge d'entrée (267), et déterminées et appliquées intérieurement par la plateforme de navigation (266) ;

        ii. la prise d'une mesure de température contemporaine (520) de l'oscillateur à cristal (263, 264) ; et

        iii. l'association des données de fréquence (510) à la mesure de température (520) et la remise à jour de premier et/ou deuxième jeux d'information de fréquence sélectionnés parmi un groupe comprenant une fréquence, une différence de fréquence, un décalage de fréquence, une erreur de fréquence, une incertitude de différence de fréquence, une incertitude de décalage de fréquence et une incertitude d'erreur de fréquence, avec les données de fréquence (510), les premier et deuxième jeux représentant les limites extérieures d'information de fréquence respectives ; et

    b. dans le mode d'acquisition :

        i. la prise d'une mesure de température actuelle (805) de l'oscillateur à cristal (263, 264) ;

        ii. la dérivation d'une estimation d'information de fréquence à partir de données mémorisées dans les premier et/ou deuxième jeux d'information de fréquence et auxquelles il est accédé à l'aide de la mesure de température actuelle afin de tenir compte d'un effet d'hystérésis du signal d'horloge d'entrée (267) du fait de la température ; et

        iii. la détermination d'une fréquence estimée du signal d'horloge d'entrée (267) utilisé pour spécifier la fenêtre de recherche de fréquence pour la mesure de température actuelle, en fonction de l'estimation d'information de fréquence.

**FIG. 1**

**FIG. 2**

100 —

**FIG. 3**

FIG. 4

**FIG. 5**

START UPDATE
UNDETERMINED                    *540*

↓

RISING
BOUND TRAINED AT          *610*
TEMPERATURE                      Y
INDEX X?

│N                                          *625*

STORE FREQUENCY OFFSET          UPDATE RISING
*620*   MEASUREMENT AT INDEX X        BOUND
          IN RISING BOUND                  (FIGURE 7)

↓

FALLING
Y          BOUND TRAINED AT          *630*
          TEMPERATURE INDEX
          X?

│N

*635*

UPDATE FALLING          STORE FREQUENCY OFFSET          *640*
BOUND                   MEASUREMENT AT INDEX X IN
(FIGURE 7)              FALLING BOUND

↓

RETURN TO          *650*
*570*

**FIG. 6**

START UPDATE
RISING OR FALLING BOUND — *550,560,625,635*

*710*

N — TABLE UNTRAINED AT TEMPERATURE INDEX? — Y

*712*          *711*

*730*

FREQUENCY INFORMATION MEASUREMENT INSIDE EXISTING BOUND? — Y

*732*

*731* — N

*740*

STORE FREQUENCY INFORMATION MEASUREMENT BY QUICK UPDATE

*720*

UPDATE FREQUENCY INFORMATION VALUE AT INDEX

*750*

STORE FREQUENCY INFORMATION MEASUREMENT BY SLOW UPDATE

*760*

RETURN TO *570*

# FIG. 7

START FREQUENCY AIDING — 430

↓

READ TEMPERATURE SENSOR — 805

↓

810 — BOTH TABLES TRAINED? —Y→ COMBINE TRAINED VALUES UNCERTAINTY 1 — 815

N ↓

820 — INTERPOLATE MISSING VALUES? —Y→ INTERPOLATE VALUES/ COMBINE RESULTING POINTS UNCERTAINTY 2 — 825

N ↓

830 — ONE TRAINED OR INTERPOLATED VALUE? —Y→ USE SINGLE SIDE VALUE UNCERTAINTY 3 — 835

N ↓

840 — NEARBY POINTS ON EITHER CURVE? —Y→ COMBINE CLOSEST POINTS UNCERTAINTY 4 — 845

N ↓

850 — ANY TRAINED POINTS? —Y→ COMBINE ALL POINTS UNCERTAINTY 5 — 855

N ↓

CONVENTIONAL FREQUENCY AIDING OR NO FREQUENCY AIDING — 860 → UNCERTAINTY 6 — 865

↓

RETURN TO 440 — 870

**FIG. 8**

34

**FIG. 9**

X

TEMPERATURE

# FIG. 10(a)

X

TEMPERATURE

# FIG. 10(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7253767 B
- WO 0186316 PCT, Gronemeyer
- US 5654718 A, Beason
- US 6509870 B, Matsushita
- US 6630872 B, Lanoue
- US 7148761 B, Shieh

**Non-patent literature cited in the description**

- Measurement and Analysis of Thermal Hysteresis in Resonators and TXCO's. **Raymond L. Filler.** 42nd Annual Frequency Control Symposium. 1998